# EUROPEAN PATENT APPLICATION

(11) **EP 4 661 124 A1**
(43) Date of publication of application: **10.12.2025**
(21) Application number: 24750234.7
(22) Date of filing: 29.01.2024
(51) Int. Cl.: H01M 10/04, H01M 10/052, H01M 10/0566, H01M 10/0585, H01M 50/184, H01M 50/46, H01M 50/489

(54) **BATTERY PRODUCTION DEVICE, BATTERY PRODUCTION SYSTEM, DEVICE FOR PRODUCING LITHIUM-ION BATTERY, AND METHOD FOR PRODUCING BATTERY**

(30) Priority: 30.01.2023 JP 2023012141; 30.01.2023 JP 2023011977; 30.01.2023 JP 2023011967; 30.01.2023 JP 2023012262
(71) Applicant: APB Corporation, Echizen-shi, Fukui 915-0043 (JP)
(72) Inventor: HORIE, Hideaki, Echizen-shi Fukui 915-0043 (JP); TANAKA,Yuya, Kyoto-shi Kyoto 605-0995 (JP); SHIMODA, Mayu, Kyoto-shi, Kyoto 605-0995 (JP); SHIMADA, Masanori, Kyoto-shi Kyoto 605-0995 (JP); EMORI,Yusuke, Kyoto-shi Kyoto 605-0995 (JP); YOKOYAMA, Yuichiro, Kyoto-shi Kyoto 605-0995 (JP); NEKOHASI, Yuki, Kyoto-shi Kyoto 605-0995 (JP); IWATA, Toshiya, Kyoto-shi Kyoto 605-0995 (JP)
(74) Representative: Lewis Silkin LLP
(86) International application number: PCT/JP2024/002717
(87) International publication number: WO 2024/162285

(57) **Abstract**

Provided with a manufacturing device of a laminated non-aqueous electrolyte secondary battery. Provided with a battery manufacturing device including an application unit (1300) configured to apply an electrolyte solution to an electrode body (1020) formed by supplying an electrode composition containing an electrode active material to a substrate (1010); and a bonding unit (1400) configured to bond a separator (1030) with the electrode body (1020) to which the electrolyte solution is applied, wherein the bonding unit (1400) has a positioning function achieved by an image processing.

## Description

### TECHNICAL FIELD

The present invention relates to a battery manufacturing device and more particularly to a manufacturing device of a laminated non-aqueous electrolyte secondary battery.

### BACKGROUND OF THE INVENTION

As a large-scale, high-capacity and high-energy-density lithium-ion battery, a laminated secondary battery formed by stacking sheet-shaped electrodes has attracted attention (shown, for example, in Patent Document 1).

The laminated secondary battery is generally formed by interposing a separator between the sheet-shaped electrodes to prevent short circuits between the electrodes, covering them with a film outer package, impregnating electrode bodies and the separator with an electrolyte solution through an opening, and sealing the film outer package.

However, when the electrolyte solution is impregnated after stacking the electrode bodies and the separator, there is a problem that the interface state between the electrode bodies and the separator and the impregnation state of the electrolyte solution into the electrode bodies cannot be visually confirmed from the outside.

In recent years, the separator has been made thinner to improve the battery capacity of the secondary battery (shown, for example, in Patent Document 2). Therefore, the separator is easily deformed and there is a risk of deformation such as bending and wrinkling during the impregnation of the electrolyte solution

### PRIOR ART

### PATENT DOCUMENTS

Patent Document 1: Japanese Patent Publication No. 2018-174074
Patent Document 2: International Patent Publication No. 2015/190265
Patent Document 3: Japanese Patent Publication No. 2017-054703
Patent Document 4: Japanese Patent Publication No. H10-255805
Patent Document 5: Japanese Patent Publication No. 2018-133344
Patent Document 6: International Patent Publication No.2019/039328
Patent Document 7: Japanese Patent Publication No. 6861127
Patent Document 8: U.S. Patent No. 10,957,944

### SUMMARY OF THE INVENTION

### PROBLEM TO BE SOLVED BY THE INVENTION

In view of the above described circumstances, the present invention aims to provide a battery manufacturing device that enables visual confirmation of the interface state of the electrodes after the electrolyte solution is impregnated.

### MEANS FOR SOLVING THE PROBLEMS

To solve the above described problem, a battery manufacturing device according to an embodiment of the present invention includes: an application unit configured to apply an electrolyte solution to an electrode body formed by supplying an electrode composition containing an electrode active material to a substrate; and an bonding unit configured to bond a separator with the electrode body to which the electrolyte solution is applied, wherein the bonding unit has a positioning function achieved by an image processing.

### EFFECTS OF THE INVENTION

The present invention can provide a battery manufacturing device that enables visual confirmation of the interface state of the electrodes after the electrolyte solution is impregnated and enables to manufacture a battery with excellent battery characteristics.

### BRIEF DESCRIPTION OF DRAWINGS

Fig. 1 is a flow chart showing a manufacturing process of a battery using a battery manufacturing device according to an embodiment of the present invention.
Figs. 2A to 2E are schematic diagrams showing steps A to E described in Fig. 1.
Figs. 3A to 3E are schematic diagrams showing a step of placing a separator in the battery manufacturing device according to an embodiment of the present invention.
Fig. 4 is a schematic diagram showing a manufacturing method of a battery according to an embodiment of the present invention.
Figs. 5A to 5F are schematic diagrams showing a separator cutting step in the manufacturing method of the battery according to an embodiment of the present invention.
Figs. 6A to 6E are schematic diagrams showing a step of placing the separator in the manufacturing method of the battery according to an embodiment of the present invention.
Fig. 7 is a schematic plan view showing a battery manufacturing system according to an embodiment of the present invention.
Fig. 8 is a perspective view of a transport jig used in the battery manufacturing system shown in Fig. 7.
Figs. 9A to 9C are schematic cross-sectional views explaining from an electrode arrangement step to an inversion step shown in Fig. 7. Fig. 9A shows an electrode arrangement step. Fig. 9B shows a separator bonding step. Fig. 9C shows an inversion step.
Figs. 10A to 10C are schematic cross-sectional views explaining from a bonding step to a first recovery step shown in Fig. 7. Fig. 10A shows a bonding preparation step. Fig. 10B shows a bonding step. Fig. 10C shows a first recovery step.
Figs. 11A to 11D are schematic cross-sectional views explaining a vacuum sealing step shown in Fig. 7. Fig. 11A shows a vacuum sealing preparation step. Fig. 11B shows a vacuum drawing step. Fig. 11C shows a heat sealing step. Fig. 11D shows a post-vacuum sealing step.
Figs. 12A to 12C are schematic cross-sectional views explaining a second recovery step shown in Fig. 7. Fig. 12A and Fig. 12B show a suction movement step. Fig. 12C shows a second recovery step.
Fig. 13 is a diagram showing a manufacturing device of a lithium-ion battery according to an embodiment of the present invention. Fig. 13 is a conceptual diagram showing a flow of a working process of the manufacturing device.
Figs. 14A to 14G are diagrams explaining the process of stacking a positive electrode and a negative electrode. Figs. 14A to 14G are process diagrams explaining situations in various steps in longitudinal cross-section.
Figs. 15A and 15B are diagrams showing a jig for transporting a sheet material. Fig. 15A is a perspective view showing the transport jig. Fig. 15B is a perspective view showing a plate that supports the sheet material at a work location.
Fig. 16 is a perspective view showing a frame member that forms a housing space with a suction function.
Fig. 17 is a perspective view showing a frame member that presses to form the housing space.
Fig. 18 is a perspective view showing a heater that thermally fuses the sheet material.
Fig. 19 is a perspective view showing a plate that cools the thermally fused sheet material.
Fig. 20 is an exploded longitudinal cross-sectional view explaining the formation of the housing space for the sheet material.
Fig. 21 is a longitudinal cross-sectional view explaining a temporary joining of the sheet material.
Fig. 22 is a longitudinal cross-sectional view explaining a cooling after the temporary joining of the sheet material.
Fig. 23 is a longitudinal cross-sectional view explaining a decompression of the housing space for the sheet material.
Fig. 24 is a longitudinal cross-sectional view explaining a permanent joining of the sheet material.
Fig. 25 is a longitudinal cross-sectional view explaining a cooling after the permanent joining of the sheet material.
Fig. 26 is an exploded longitudinal cross-sectional view explaining a recovery of the permanently joined semi-finished sheet material.
Fig. 27 is a plan view showing the structure of a heater that thermally fuses the sheet material.
Fig. 28 is a plan view explaining the formation and the decompression of the housing space for the sheet material in the transport jigs arranged in parallel at the work location.
Fig. 29 is a block diagram showing a control circuit that provides overall control of the manufacturing device.
Figs. 30A and 30B are diagrams explaining the positioning of the positive electrode sheet material and the separator sheet. Fig. 30A is a plan view of the entire photographed image. Fig. 30B is an enlarged plan view of a partial corner portion indicated by XVIIIb in Fig. 30A.
Figs. 31A and 31B are diagrams explaining the positioning of the positive electrode sheet material and the separator sheet. Fig. 31A is a plan view of the entire photographed image. Fig. 31B is an enlarged plan view of a partial corner portion indicated by XIXb in Fig. 31A.
Fig. 32 is a flow chart explaining a processing procedure (method) executed by the control circuit.
Fig. 33 is a flow chart explaining a subroutine in the processing procedure (method).

### DETAILED DESCRIPTION OF THE INVENTION

Hereinafter, embodiments of the present invention will be explained in detail with reference to the drawings. The embodiments described below exemplify the forms that specifically realize the present invention. Therefore, the configurations of the embodiments described below should be appropriately modified or changed according to the configuration of the device to which the present invention is applied and various conditions, and the present invention is not limited to the following embodiments.

### 1. Battery manufacturing process

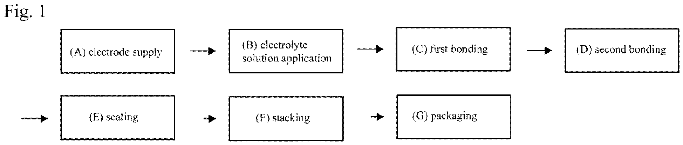

Fig. 1 is a flow chart showing a manufacturing process of a battery using a battery manufacturing device according to an embodiment of the present invention. Different from the conventional manufacturing process, in the present embodiment, an electrode body is supplied (step A), then an electrolyte solution is applied to the surface of the electrode body (step B), and then a separator is bonded with the electrode body to which the electrolyte solution is applied (step C). Then, the electrode body with which the separator is bonded is bonded with another electrode body (step D), and then the obtained laminated body is sealed to form single cells (step E), and then the obtained single cells are further stacked (step F) and packaged to manufacture a laminated non-aqueous electrolyte secondary battery (step G). A battery manufacturing device according to an embodiment of the present invention includes an application unit 1300 that applies an electrolyte solution 1025 to an electrode body 1020 formed by supplying an electrode composition containing an electrode active material to a substrate 1010 for performing step B, and a bonding unit 1400 that bonds a separator 1030 with the electrode body 1020 to which the electrolyte solution 1025 is applied for performing step C.

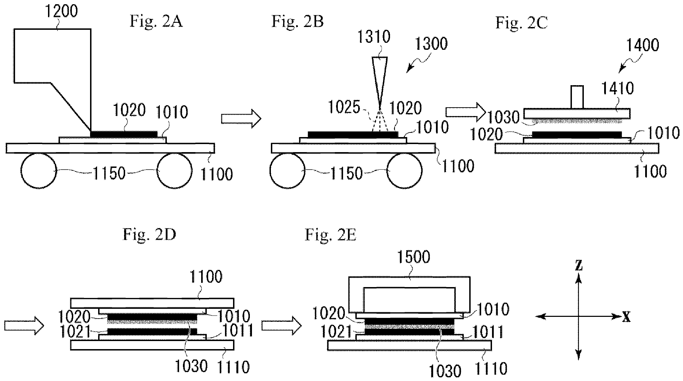

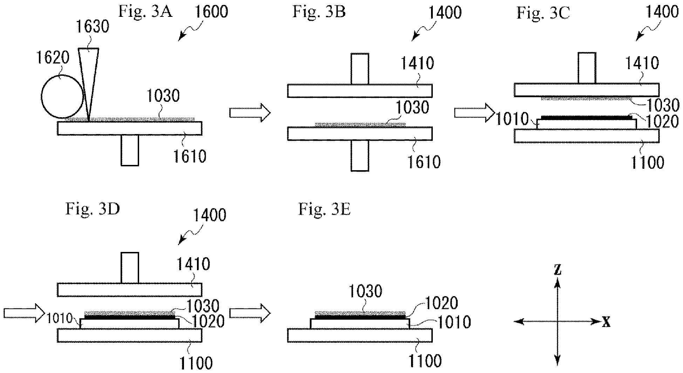

Figs. 2A to 2E are schematic diagrams showing steps A to E. In Figs. 2A to 2E and Figs. 3A to 3E, X-axis, Y-axis and Z-axis are appropriately used as directional axes for explaining the mechanism of the battery manufacturing device in each step of the present embodiment. The X-axis is the axis along the movement direction of a transport jig 1100, a support body 1410 and a second support body 1610. The X-axis corresponds to the longitudinal direction when cutting the belt-shaped separator described later. The Y-axis is the axis perpendicular to the X-axis on a horizontal plane. The Y-axis corresponds to the short direction of the belt-shaped separator. The Y-axis is the direction projecting vertically from the plane defining the drawing. The Z-axis is the vertical axis perpendicular to the X-axis and Y-axis. The Z-axis is equal to the stacking direction of the separator 1030 that is the stacking target.

Fig. 2 shows the step of supplying an electrode composition containing an electrode active material from an electrode supply unit 1200 to the substrate 1010 to form the electrode body 1020. In an embodiment of the present invention, the electrode body 1020 includes an electrode active material layer and the substrate 1010 includes a current collector and a frame body. The electrode active material layer and the current collector are arranged in this order from the separator 1030 side. The frame body surrounds the electrode active material layer.

In an embodiment of the present invention, the electrode body 1020 includes an electrode active material layer and the substrate 1010 includes a current collector and a frame body. The electrode active material layer and the current collector are arranged in this order from the separator 1030 side. The frame body surrounds the electrode active material layer.

The frame body prevents the contact between the current collectors and short circuits at the ends of single cells. The material constituting the frame body may be any material having insulation properties, sealing properties (liquid tightness), heat resistance under the battery operating temperature, for example. The resin materials are preferably adopted.

The electrode body 1020 formed on the substrate 1010 as shown in Fig. 2A is transported together with the transport jig 1100 by a transport means such as a roller 1150 to an electrolyte solution application step (step B). The electrode supply unit 1200 and the later described application unit 1300 may be provided in the same device or may be separate devices.

Fig. 2B shows the step of applying the electrolyte solution 1025 to the surface of the electrode body 1020 obtained in step A. In an embodiment of the present invention, the battery manufacturing device includes the application unit 1300 as described above. Any method can be used for applying the electrolyte solution 1025 as long as the surface of the electrode body 1020 is not destroyed. For example, the electrolyte solution 1025 may be sprayed onto the surface of the electrode body 1020 by a nozzle 1310.

As for the electrolyte solution, the electrolyte solution used in conventionally known non-aqueous electrolyte solutions can be used. For example, lithium salts of inorganic acids such as LiPF₆, LiBF₄, LiSbF₆, LiAsF₆ and LiClO₄ and lithium salts of organic acids such as LiN(CF₃SO₂)₂, LiN(C₂F₅SO₂)₂ and LiC(CF₃SO₂)₃ can be listed. Among these, LiPF₆ is preferable from the viewpoint of the battery output and the charge-discharge cycle characteristics.

As for the solvent, the solvent used in conventionally known non-aqueous electrolyte solutions can be used. For example, lactone compounds, cyclic or chain carbonates, chain carboxylic acid esters, cyclic or chain ethers, phosphoric acid esters, nitrile compounds, amide compounds, sulfones, sulfolanes and mixtures thereof can be used.

In another embodiment, the application unit 1300 may include a temperature adjustment unit (not illustrated) that adjusts the temperature of the electrolyte solution 1025 and a nozzle 1310 that applies the electrolyte solution 1025 and may further include a system unit (not illustrated) that calculates the amount of electrolyte solution 1025 to be applied from the weight of the electrode body 1020 before applying the electrolyte solution 1025 and causes the nozzle 1310 to apply the calculated amount. Since the electrolyte solution 1025 is heated and the viscosity is reduced, the impregnation speed of the electrolyte solution 1025 into the electrode body 1020 can be increased and the aging can be promoted after the electrolyte solution 1025 is applied onto the surface of the electrode body 1020. In the present specification, "aging" refers to the fact that the liquid pools (droplets) of the electrolyte solution 1025 applied to the electrode body 1020 is impregnated into the electrode body 1020 and visually undetectable on the surface of the electrode body 1020. Since the electrolyte solution 1025 is sufficiently aged after applying the electrolyte solution 1025 onto the electrode body 1020, liquid pools on the surface of the electrode body 1020 are suppressed. Thus, unnecessary size changes of the separator and air incorporation during the later-described separator bonding step can be suppressed. Therefore, the bonding can be performed stably.

In another embodiment, the application unit 1300 may further include a transport unit (not illustrated) that transports the electrode body 1020 to which the electrolyte solution 1025 is applied to the bonding unit 1400. The transport unit can transport the electrode body 1020 to which the electrolyte solution 1025 is applied from the nozzle 1310 to the bonding unit 1400 at any speed and the aging of the electrode body 1020 can be performed during the transportation. The transport unit may further include a variable transport speed function and the speed of the transport unit may be adjusted according to the temperature and the amount of the electrolyte solution 1025. When the speed of the transport unit is adjusted, the aging of the electrode body 1020 to which the electrolyte solution 1025 is applied can be completed before the separator bonding step. Thus, the battery manufacturing device can be operated without generating wasteful waiting time.

Fig. 2C shows the step of bonding the separator 1030 with the electrode body 1020 to which the electrolyte solution 1025 is applied in step B. As described above, the battery manufacturing device includes the bonding unit 1400 in addition to the application unit 1300 and it is preferable that the electrode body 1020 to which the electrolyte solution 1025 is applied is transported from the application unit 1300 to the bonding unit 1400 by the transport unit (not illustrated).

Figs. 3A to 3E are schematic diagrams showing the step of placing the separator in the bonding unit 1400.

Fig. 3A shows the step of placing the belt-shaped separator onto the second support body 1610 via a guide roller 1620 and cut to predetermined dimensions by a cutter 1630 in a separator cutting unit 1600. Since the separator 1030 is involved in the performance of the manufactured battery, it is preferable that the separator 1030 is formed of a material having ion permeability by electrolyte solution impregnation and excellent electrical insulation, electrolyte solution resistance and oxidation resistance. For example, polyolefin resins, polyamideimide resins, polyimide resins, fluorine resins and mixtures thereof can be used. In the present embodiment, the thickness of the separator 1030 may be any thickness as long as the separator 1030 can appropriately prevent short circuits between the electrodes. For example, a film having a thickness of 20 µm or less can be used as the separator 1030. Preferably, the separator 1030 having a thickness of 8 to 20 µm can be used.

Then, the cut separator 1030 is transported from the second support body 1610 to the support body 1410 (shown in Fig. 3B). The support body 1410 is formed of a porous body provided with a plurality of air holes. The lower ends of the air holes are exposed on the surface of the support body 1410 and the upper ends are connected to gas piping (not illustrated). The gas piping is supplied with negative pressure (Vac) and positive (static) pressure (Prs) gas.

After the second support body 1610 is moved to the position where the cut separator 1030 on the second support body 1610 and the surface of the support body 1410 face to each other, the support body 1410 descends in the Z-axis direction and contacts the cut separator 1030 (not illustrated). Then, a separator holding mechanism of the second support body 1610 is released while applying negative pressure to the gas piping of the support body 1410. Thus, the cut separator 1030 is held on the surface of the support body 1410. The second support body 1610 may include a separator holding mechanism using negative pressure similar to the support body 1410.

Then, the support body 1410 holding the cut separator 1030 is moved in the X-axis direction to face the electrode body 1020 formed on the substrate 1010 placed on the transport jig 1100 (shown in Fig. 3C). The electrode body 1020 may be either a positive electrode or a negative electrode. At this time, the operator can observe the state of the interface of the electrode body 1020. The observation may be visual or by a camera (not illustrated).

Then, the positioning of the electrode body 1020 and the cut separator 1030 is performed and the cut separator 1030 is bonded with the electrode body 1020 (shown in Fig. 3D). The bonding unit 1400 may further include a positioning mechanism for positioning the electrode body 1020 and the cut separator 1030 and the positioning may be performed by image processing. The bonding unit 1400 may be equipped with an alignment camera (not illustrated).

The bonding of the cut separator 1030 may be performed by contacting the cut separator 1030 with the electrode body 1020 and then releasing the negative pressure in the gas piping of the support body 1410. Preferably, the surface of the support body 1410 that contacts the separator 1030 includes a buffer layer (not illustrated). The buffer layer can prevent the electrolyte solution 1025 from entering the gas piping through the holes on the surface of the support body 1410 from the electrode body 1020 to which the electrolyte solution 1025 is applied when the separator 1030 is contacted and bonded with the electrode body 1020 to which the electrolyte solution 1025 is applied. During the bonding, the positive pressure may be further applied to the gas piping to promote the separation from the support body 1410.

It is also possible to place the cut separator 1030 at a short distance from the electrode body 1020, change the gas piping of the support body 1410 from negative pressure to positive pressure and release the gas from the gas piping through the holes on the surface of the support body 1410 to bond the cut separator 1030 with the electrode body 1020. In the above described case of non-contact bonding, the support body 1410 does not contact the surface of the electrode body 1020 and the bonding can be performed without impregnating the support body 1410 with the electrolyte solution 1025.

The bonding unit 1400 may further include a static electricity removal unit. An ionizer or the like can be used for the static electricity removal unit. The static electricity removal unit can suppress the curling of the separator 1030 during the bonding.

In the first laminated body (Fig. 3E) obtained in the above described way, the state of the separator 1030 can be observed. The observation may be visual or by a camera (not illustrated).

Furthermore, since the separator 1030 having a thin-film shape and bonded with the electrode body 1020 to which the electrolyte solution 1025 is applied is liquid-adhered to the surface of the electrode body 1020, displacement and peeling of the separator 1030 after the bonding can be suppressed. Therefore, peeling of the separator 1030 can be suppressed in the first laminated body even when the transport jig 1100 is inverted so that the separator 1030 becomes the bottommost surface.

Fig. 2D shows the step of bonding the inverted first laminated body with another electrode body 1021. The electrode body 1021 is an electrode body having a polarity opposite to that of the electrode body 1020. Since the state of the separator 1030 can be observed before the second bonding step as described above, inappropriately bonded first body may be removed in advance or battery characteristics may be predicted. In addition, since the positioning can be performed appropriately, short circuits in the single cells can be appropriately prevented.

Fig. 2E shows the step of sealing the obtained second laminated body with a sealing unit 1500 to create single cells. The single cells obtained in the above described way can be stacked and packaged to form a laminated non-aqueous electrolyte secondary battery.

As described above, since the states of the electrode bodies 1020 and 1021 and the separator 1030 can be observed before the bonding step, inappropriate electrode body or first laminated body can be removed in advance or battery characteristics can be predicted. In addition, since the positioning can be performed appropriately, short circuits within the single cells can be appropriately prevented. Therefore, the present invention can provide a battery manufacturing device that enables visual confirmation of the interface state of the electrode after the electrolyte solution is impregnated and enables to manufacture a battery with excellent battery characteristics.

### <Summary of embodiments>

Then, the invention-defining features constituting the present invention will be listed using the reference numerals and the like in the embodiments described above. It goes without saying that the following reference numerals and the like merely explain the constituent elements in the claims with reference to the description of the embodiments and do not limit the constituent elements to specific members and the like.
[1] A battery manufacturing device including:
   an application unit configured to apply an electrolyte solution to an electrode body formed by supplying an electrode composition containing an electrode active material to a substrate; and
   a bonding unit configured to bond a separator with the electrode body to which the electrolyte solution is applied, wherein
   the bonding unit has a positioning function achieved by an image processing.
[2] The battery manufacturing device according to [1], wherein the application unit includes a temperature adjustment unit configured to adjust a temperature of the electrolyte solution and a nozzle configured to apply the electrolyte solution, and the battery manufacturing device further includes a system unit configured to calculate an amount of the electrolyte solution to be applied based on a weight of the electrode body before applying the electrolyte solution and cause the nozzle to apply the calculated amount of the electrolyte solution.
[3] The battery manufacturing device according to [1] or [2], wherein the bonding unit includes a support body configured to hold the separator and bond the separator with the electrode body to which the electrolyte solution is applied, a surface of the support body is formed of a porous body having a hole in fluid communication with a gas piping, a negative pressure is configured to be applied to the gas piping when the support body holds the separator, the surface of the support body, which is configured to be in contact with the separator, includes a buffer layer, and the buffer layer prevents the electrolyte solution from entering the gas piping from the electrode body to which the electrolyte solution is applied when the separator is contacted and bonded with the electrode body to which the electrolyte solution is applied.
[4] The battery manufacturing device according to any one of [1] to [3], wherein the bonding unit includes a support body configured to hold the separator and bond the separator with the electrode body to which the electrolyte solution is applied, a surface of the support body is formed of a porous body having a hole in fluid communication with a gas piping, a negative pressure is configured to be applied to the gas piping when the support body holds the separator, and gas is configured to be released from the gas piping through the hole when the separator is contacted and bonded with the electrode body to which the electrolyte solution is applied.

The battery manufacturing device according to any one of [1] to [4], wherein the bonding unit further includes a static electricity removal unit.

[6] A manufacturing method of a battery, the manufacturing method including:
a step of supplying an electrode composition containing an electrode active material to a substrate to form an electrode body;
a step of applying an electrolyte solution to the electrode body;
a step of cutting a separator to a size that covers the electrode body; and
a step of transporting the cut separator onto the electrode body to which the electrolyte solution is applied, positioning the separator and the electrode body by image processing and bonding the separator with a surface of the electrode body to which the electrolyte solution is applied.

Although the embodiments of the present invention and the modification examples have been described above, each configuration and the combination of them in the embodiments and the modification examples are merely examples. Thus, additions, omissions, substitutions and other modifications of the configurations are possible within the scope not departing from the gist of the present invention. In addition, the present invention is not limited by the embodiments.

The present invention also relates to a manufacturing method of a battery described below, specifically to a manufacturing method of a battery including the method of cutting and transporting a separator having a thin-film shape. The manufacturing method of the battery may utilize the above described manufacturing method of the battery.

As a large-scale, high-capacity and high-energy-density lithium-ion battery, a laminated secondary battery formed by stacking sheet-shaped electrodes has attracted attention (shown, for example, in Patent Document 1).

The laminated secondary battery is generally formed by interposing a separator between sheet-shaped electrodes to prevent short circuits between the electrodes, covering them with a film outer package, impregnating the electrodes and the separator with an electrolyte solution and sealing the film outer package. The larger the area of the electrode relative to the area of the sheet, the larger the energy capacity per single cell.

However, when the area of the electrode relative to the area of the sheet is increased, the sealing region of the film outer package becomes smaller. In addition, the separator needs to have a size that sufficiently covers the electrodes. However, if the separator extends into the sealing region of the film outer package, the adhesion of the sealing region is reduced and sufficient sealing properties may not be provided.

As the method for stacking the separator on the electrodes, Patent Document 5 discloses the method of forming a separator layer on a belt-shaped positive electrode and then cutting the belt-shaped positive electrode together with the separator. In the above described method, the dimensions of the separator and the positive electrode match at the cut surface and the internal short-circuit may not be suppressed sufficiently.

In addition, Patent Document 6 proposes a method of providing an electrode on a separator and then cutting the separator. However, when the separator is cut at the position that does not affect the electrode, a significant amount of the separator is wasted.

Furthermore, it is predicted that the separator will be thinner to improve the battery capacity of the secondary battery (shown, for example, in Patent Document 2).

Therefore, in order to provide a laminated secondary battery that has sufficient sealing properties while increasing the electrode area, it is necessary to cut a thin-film separator accurately and transport the thin-film separator appropriately onto the electrode.

In view of the above described circumstances, the present invention aims to provide a manufacturing method of a battery including a method for accurately cutting the thin-film separator and appropriately transporting the thin-film separator onto the sheet-shaped electrode.

To solve the above described problem, a manufacturing method of a battery according to an embodiment of the present invention includes: a step of transporting a separator having a belt-shape from a separator roll and placing the separator on a first support body; a step of cutting the separator having the belt-shape to a predetermined length on the first support body; and a step of bonding the cut separator with an electrode body.

The present invention can provide a manufacturing method of a battery including a method for accurately cutting a thin-film separator and appropriately transporting the thin-film separator onto a sheet-shaped electrode.

Hereinafter, embodiments of the present invention will be explained in detail with reference to the drawings. The embodiments described below exemplify the forms that specifically realize the present invention. Therefore, the configurations of the embodiments described below should be appropriately modified or changed according to the configuration of the device to which the present invention is applied and various conditions, and the present invention is not limited to the following embodiments.

### 1. Manufacturing method of battery

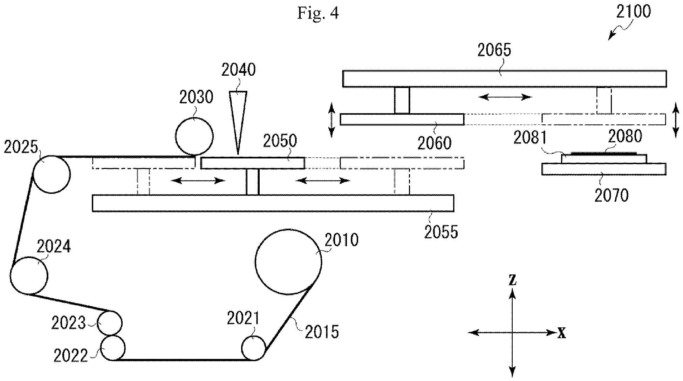

A manufacturing method of a battery according to an embodiment of the present invention will be explained. Fig. 4 is a schematic diagram showing a manufacturing method of a battery according to an embodiment of the present invention. As shown in Fig. 4, a battery manufacturing device 2100 implementing the present embodiment includes a separator roll 2010, transport rollers 2021 to 2025, a guide roller 2030, a cutter 2040, a first support body 2050, a first transport path 2055, a second support body 2060, a second transport path 2065 and a transport jig 2070. The first support body 2050 and the second support body 2060 can be moved by the first transport path 2055 and the second transport path 2065 respectively. The first support body 2050 shown in Figs. 4 to 6E corresponds to the second support body 1610 shown in Figs. 2A to 3E. In addition, the second support body 2060 shown in Figs. 4 to 6E corresponds to the support body 1410 shown in Figs. 2A to 3E.

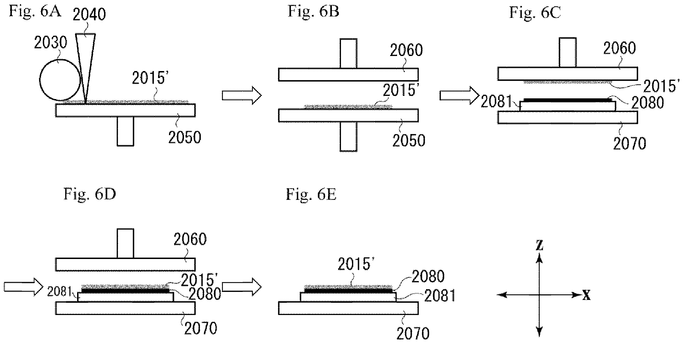

In Figs. 4 to 6E, X-axis, Y-axis and Z-axis are appropriately used as directional axes for explaining the mechanism of the battery manufacturing device 2100 in each step of the present embodiment. The X-axis is the axis along the movement direction of the first support body 2050 and the second support body 2060. The X-axis corresponds to the longitudinal direction when cutting a belt-shaped separator 2015 described later. The Y-axis is the axis perpendicular to the X-axis on a horizontal plane. The Y-axis corresponds to the short direction of the belt-shaped separator 2015. The Y-axis is the direction projecting vertically from the plane defining the drawing. The Z-axis is the vertical axis perpendicular to the X-axis and Y-axis. The Z-axis is equal to the stacking direction of the separator 2015 that is the stacking target. In the explanation of the arrangement of each mechanism of the battery manufacturing device 2100, the separator roll 2010 side is the upstream side and the transport jig 2070 side where the cut separator 2015' is stacked on the electrode 2080 is the downstream side.

In the manufacturing method of the battery according to the present embodiment, the belt-shaped separator 2015 is transported from the separator roll 2010 and placed on the first support body 2050. Then, the separator 2015 is cut to a predetermined length on the first support body 2050, transported by the second support body 2060 and bonded with the electrode 2080. Hereinafter, each step of the present embodiment will be explained in detail using the drawings.

### (Separator cutting step)

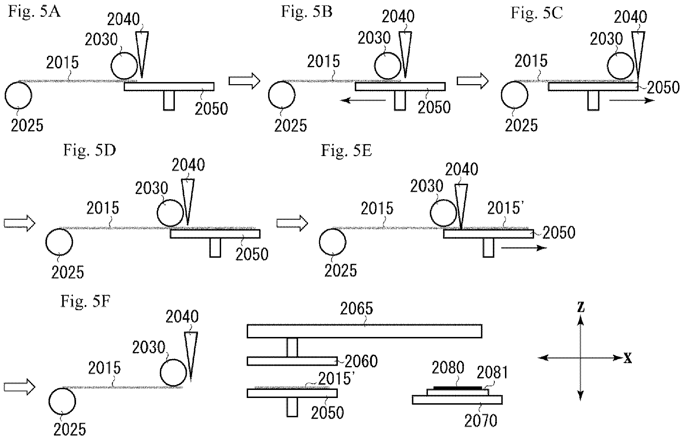

The belt-shaped separator 2015 is drawn from the separator roll 2010, passes through transport rollers 2021 to 2025 and is transported to the guide roller 2030 (shown in Fig. 4 and Figs. 5A to 5F). Figs. 5A to 5F are schematic diagrams showing the cutting step of the belt-shaped separator 2015. In Figs. 5A to 5F, the separator roll 2010, the transport rollers 2021 to 2024 and the first transport path 2055 are omitted.

The separator roll 2010 is a roll of the belt-shaped separator 2015 and the axis of the roll is parallel to the Y-axis. Since the belt-shaped separator 2015 is involved in the performance of the manufactured battery, it is preferable that the belt-shaped separator 2015 is formed of a material having ion permeability by electrolyte solution impregnation and having excellent electrical insulation, electrolyte solution resistance and oxidation resistance. For example, polyolefin resins, polyamideimide resins, polyimide resins, fluorine resins and mixtures thereof can be used.

In the present embodiment, the thickness of the belt-shaped separator 2015 may be any thickness as long as the belt-shaped separator 2015 can appropriately prevent short circuits between the electrodes. For example, a film having a thickness of 20 µm or less can be used as the belt-shaped separator 2015. Preferably, the belt-shaped separator 2015 having a thickness of 8 to 20 µm can be used.

The belt-shaped separator 2015 drawn from the separator roll 2010 is transported by transport rollers 2021 to 2025. The number of the transport rollers may be one or more and may be plural. Fig. 4 shows five transport rollers, but the number of the transport rollers is not limited to five.

In addition, at least one of the transport rollers is preferably a helical roller. More preferably, a plurality of transport rollers is helical rollers. Further more preferably, all transport rollers are helical rollers. As described above, since the belt-shaped separator 2015 is in the form of a thin film, wrinkles and meandering are likely to occur during the transportation. The helical rollers can improve wrinkles and meandering of the belt-shaped separator 2015 during the transportation and keep the longitudinal ends of the belt-shaped separator 2015 always parallel to the X-axis.

In an embodiment of the present invention, the belt-shaped separator 2015 is preferably drawn from the separator roll 2010 under a tension that does not exceed the yield point of the belt-shaped separator 2015. If the belt-shaped separator 2015 is transported without applying tension, sagging may occur and wrinkles and twisting may be caused. On the other hand, if the belt-shaped separator 2015 is drawn with tension exceeding the yield point, the belt-shaped separator 2015 itself may be deformed and dimensional accuracy may be reduced.

The belt-shaped separator 2015 transported to the guide roller 2030 by the transport rollers 2021 to 2025 and fixed to the guide roller 2030 is temporarily fixed to the first support body 2050 (shown in Fig. 5A). The first support body 2050 has a structure provided with a plurality of air holes. The upper ends of the air holes are exposed on the surface of the first support body 2050 and the lower ends are connected to air piping (not illustrated). The air piping is supplied with negative pressure (Vac) and positive pressure (Prs) air. When the negative pressure is applied to the air piping of the first support body 2050, the belt-shaped separator 2015 is held on the first support body 2050. When the first support body 2050 temporarily fixes the belt-shaped separator 2015, a first negative pressure is applied to the air piping.

Then, the first support body 2050 moves in the negative direction of the X-axis along the first transport path while applying the first negative pressure to the air piping (shown in Fig. 5B). As a result, the belt-shaped separator 2015 sandwiched between the guide roller 2030 and the first support body 2050 is placed on the first support body 2050 so as to cover the surface of the first support body 2050. Since the belt-shaped separator 2015 is drawn while maintaining a state of being loaded with tension not exceeding the yield point, the belt-shaped separator 2015 can be placed on the first support body 2050 without generating wrinkles and while keeping the longitudinal ends of the belt-shaped separator 2015 parallel to the X-axis.

When the belt-shaped separator 2015 of a predetermined length covers the surface of the first support body 2050, the first support body 2050 moves in the positive direction of the X-axis along the first transport path while applying a second negative pressure lower than the first negative pressure to the air piping and holding the belt-shaped separator 2015 on the surface (shown in Figs. 5C and 5D).

When the cutting position of the belt-shaped separator 2015 coincides with the cutting position of the cutter 2040, the movement of the first support body 2050 is stopped and the belt-shaped separator 2015 is cut to a predetermined length by the cutter 2040 (shown in Fig. 5E). For example, the belt-shaped separator 2015 is cut to a size that covers the electrode 2080. The cutter 2040 cuts the belt-shaped separator 2015 perpendicular to the X-axis (i.e., parallel to the Y-axis). The cutting position may be confirmed by the camera so that the cut portion is perpendicular to the longitudinal ends of the belt-shaped separator 2015 and the cutting may be performed after correcting the angle between the cutter 2040 and the first support body 2050. Since the belt-shaped separator 2015 is cut perpendicular to the longitudinal ends of the belt-shaped separator 2015, the separator can be cut with high dimensional accuracy.

Then, the cut separator 2015' moves to the electrode bonding step described later (shown in Fig. 5F). The remaining belt-shaped separator 2015 is fixed to the guide roller 2030 and the steps from Fig. 5A are repeated.

### (Separator bonding step)

The cut separator 2015' is bonded with the electrode 2080. The cut separator 2015' is transported by the second support body 2060 and bonded with the electrode 2080. Figs. 6A to 6E are schematic diagrams showing the bonding step of the cut separator 2015'. In Figs. 6A to 6E, the first transport path 2055 and the second transport path 2065 are omitted.

The separator 2015' cut as described above (shown in Fig. 6A) is transported from the first support body 2050 onto the electrode 2080 by the second support body 2060 (shown in Figs. 6B to 6D).

Similar to the first support body 2050, the second support body 2060 has a structure provided with a plurality of air holes. The lower ends of the air holes are exposed on the surface of the second support body 2060 and the upper ends are connected to air piping (not illustrated). The air piping is supplied with negative pressure (Vac) and positive pressure (Prs) air.

After the cut separator 2015' on the first support body 2050 and the surface of the second support body 2060 are moved to facing positions (shown in Fig. 6B), the second support body 2060 descends in the Z-axis direction and contacts the cut separator 2015' (not illustrated). Then, the negative pressure in the air piping of the first support body 2050 is released while applying negative pressure to the air piping of the second support body 2060, and the cut separator 2015' is held on the surface of the second support body 2060.

The second support body 2060 holding the cut separator 2015' is moved in the X-axis direction along the second transport path to face the electrode 2080 formed on a substrate 2081 placed on the transport jig 2070 (shown in Fig. 6C).

The electrode 2080 formed on the substrate 2081 can be any electrode as long as it is a sheet-shaped electrode. The electrode 2080 may be either a positive electrode or a negative electrode.

Then, the positioning of the electrode 2080 and the cut separator 2015' is performed and the cut separator 2015' is bonded with the electrode 2080 (shown in Fig. 6D). The bonding of the cut separator 2015' may be performed by contacting the cut separator 2015' with the electrode 2080 and then releasing the negative pressure in the air piping of the second support body 2060. It is also possible to place the cut separator 2015' at a short distance from the electrode body 2080, change the air piping of the second support body 2060 from negative pressure to positive pressure to bond the cut separator 2015' with the electrode body 2080.

The positioning of the electrode 2080 and the cut separator 2015' may be performed by an alignment camera (not illustrated).

Since the cut separator 2015' is cut with high precision according to the size of the electrode 2080 and the substrate 2081, short circuits in the sheet-shaped electrode 2080 can be appropriately prevented while ensuring sufficient sealing properties.

### <Summary of embodiments>

Then, the invention-defining features constituting the present invention will be listed using the reference numerals and the like in the embodiments described above. It goes without saying that the following reference numerals and the like merely explain the constituent elements in the claims with reference to the description of the embodiments and do not limit the constituent elements to specific members and the like.
[1] A manufacturing method of a battery, the manufacturing method including:
   a step of transporting a separator having a belt-shape from a separator roll and placing the separator on a first support body;
   a step of cutting the separator having the belt-shape to a predetermined length on the first support body; and
   a step of bonding the cut separator with an electrode body.
[2] The manufacturing method of the battery according to [1], wherein a thickness of the separator is 20 µm or less.
[3] The manufacturing method of the battery according to [1] or [2], wherein the separator having the belt-shape is transported by a helical roller, and a cut surface of the separator having the belt-shape is perpendicular to a traveling direction of the separator having the belt-shape.
[4] The manufacturing method of the battery according to any one of [1] or [3], wherein the first support body has a function of holding the separator.
[5] The manufacturing method of the battery according to [4], wherein the function of holding the separator is vacuum suction.
[6] The manufacturing method of the battery according to any one of [1] or [5], wherein the separator having the belt-shape is drawn from the separator roll under a tension that does not exceed a yield point.
[7] The manufacturing method of the battery according to any one of [1] or [6], further including a step of transporting the cut separator from the first support body to a second support body and transporting the cut separator onto the electrode body.
[8] The manufacturing method of the battery according to [7], further including a step of performing positioning of the electrode body and the cut separator after the cut separator is transported onto the electrode body.

Although the embodiments of the present invention and the modification examples have been described above, each configuration and the combination of them in the embodiments and the modification examples are merely examples. Thus, additions, omissions, substitutions and other modifications of the configurations are possible within the scope not departing from the gist of the present invention. In addition, the present invention is not limited by the embodiments.

The present invention also relates to a battery manufacturing system including a recovery means for transporting a transport jig described below. The battery manufacturing system may include the above described battery manufacturing device.

In recent years, a lithium-ion battery has been required to have high capacity and high energy density. Thus, a battery electrode itself to be stacked has been made thinner.

For example, Patent Document 5 describes a lithium-ion battery in which a thinned belt-shaped positive electrode and a thinned belt-shaped negative electrode are unwound from a wound positive electrode roll and a wound negative electrode roll and cut into a positive electrode sheet and a negative electrode sheet through continuous processing steps using feed rollers as a transport means, and then the positive electrode sheet is bonded with the negative electrode sheet via a separator layer to form a battery cell.

However, in Patent Document 5, when correcting the bonding position of the positive electrode sheet and the negative electrode sheet, the rotation speed of the feed rollers is adjusted based on positional deviation information of defective products. Thus, the correction of the bonding position is not easy and the yield is inevitably low.

In contrast, for example, Patent Document 7 describes a lithium-ion battery in which a battery cell is formed by dividing the process into an electrode arrangement step, a separator bonding step, a bonding step and a vacuum sealing step, rather than continuous processing steps. Thus, the positioning of the positive electrode sheet and the negative electrode sheet is performed in each processing step.

Therefore, in Patent Document 7, the positioning of the positive electrode sheet and the negative electrode sheet can be performed relatively easily in each processing step. However, the rigidity of the thinned positive electrode sheet and the thinned negative electrode sheets is extremely low. Thus, when the positive electrode sheet and the negative electrode sheet are transported to different transport jigs between processing steps, there is a risk of damage to the positive electrode sheet and the negative electrode sheet, which are workpieces, and the production efficiency is reduced due to the transporting time.

The present invention has been made in view of the above described problems and aims to provide a battery manufacturing system that does not require to transfer the workpieces to transport jigs between the processing steps of the battery manufacturing system and can recover the transport jigs separated from the workpieces to upstream processes.

To solve the above described problem, the battery manufacturing system of the present invention includes: an electrode arrangement unit configured to arrange battery electrodes containing an electrolyte solution on two transport jigs respectively; a separator bonding unit configured to bond a separator with one of the battery electrodes held on one of the transport jigs; an inversion unit configured to invert one of the transport jigs; a bonding unit configured to bond one of the battery electrodes held on one of the transport jigs with the other of the battery electrodes held on the other of the transport jigs; and a first recovery unit configured to separate one of the transport jigs from the bonded battery electrodes on the other of the transport jigs and transport one of the transport jigs to the electrode arrangement unit, wherein the first recovery unit includes a transport line connected to the electrode arrangement unit or an automatic transport unit for transporting one of the transport jigs to the electrode arrangement unit.

The battery manufacturing system may be configured such that the transport jig includes a jig frame portion and a flexible transport film erected on the jig frame portion, and the transport film includes an adhesive layer for adhesive fixing or an insulator for electrostatic fixing in a region where the battery electrodes are placed.

The battery manufacturing system may be configured such that the adhesive layer of the transport film has thermosensitivity.

The battery manufacturing system may be configured such that the bonding unit is configured to perform a heat sealing at intervals along a pair of edge portions extending in a direction in which the transport film is erected in the bonded battery electrodes on the other of the transport jigs.

The battery manufacturing system may be configured such that the other of the transport jigs include a vacuum seal unit configured to define a part of a vacuum chamber and heat seal an entire periphery of the bonded battery electrodes on the other of the transport jigs under vacuum to form a battery cell.

The battery manufacturing system may further include a second recovery unit configured to separate the other of the transport jigs from the battery cell formed on the other of the transport jigs and transport the other of the transport jigs to the electrode arrangement unit.

According to the present invention, it is possible to provide a battery manufacturing system that does not require to transfer the workpieces to the transport jigs between the processing steps of the battery manufacturing system and can recover the transport jigs separated from the workpieces to upstream processes.

Hereinafter, embodiments of the present invention will be explained in detail with reference to the drawings. The embodiments described below exemplify the forms that specifically realize the present invention. Therefore, the configurations of the embodiments described below should be appropriately modified or changed according to the configuration of the device to which the present invention is applied and various conditions, and the present invention is not limited to the following embodiments.

### <About terms>

In the description of the present specification and claims, each term is defined as follows. The "film" does not indicate something having a thickness less than a predetermined value, but indicates something having various thicknesses.

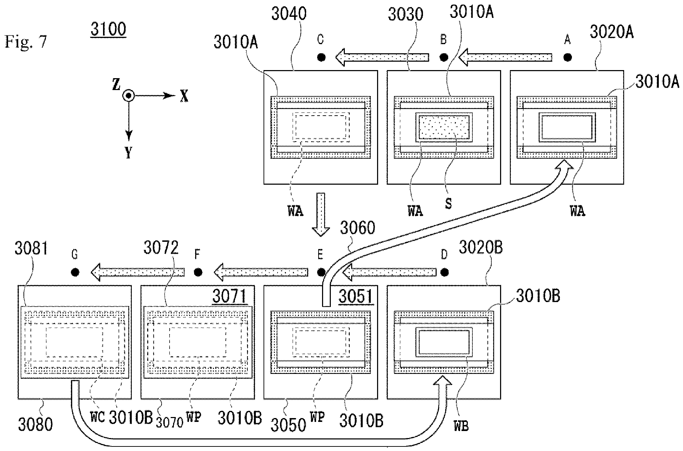

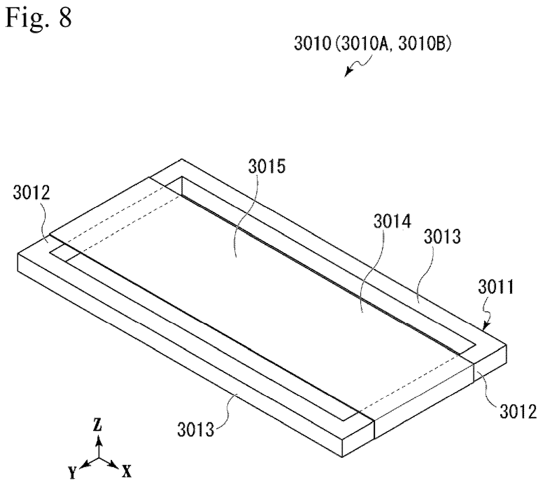

Fig. 7 is a schematic plan view showing a battery manufacturing system 3100 according to an embodiment of the present invention. Fig. 8 is a perspective view of a transport jig 3010 (3010A, 3010B) used in the battery manufacturing system shown in Fig. 7. Here, the X-axis direction indicates the direction in which a pair of long side portions 3013 of the transport jig 3010 (3010A, 3010B) extends. The Y-axis direction indicates the direction in which a pair of short side portions 3012 of the transport jig 3010 (3010A, 3010B) extends. The Z-axis direction is perpendicular to the X-axis direction and the Y-axis direction. The Z-axis direction indicates the direction that the workpiece W (WA, WB) faces when each processing step is performed on the workpiece W (WA, WB).

### <About battery manufacturing system>

A battery manufacturing system 3100 stacks battery electrodes that are workpieces W (WA, WB) to form a battery cell WC. The battery manufacturing system 3100 includes a transport jig 3010 (3010A, 3010B), an electrode arrangement unit (electrode arrangement means) 3020A, 3020B, a separator bonding unit (separator bonding means) 3030, an inversion unit (inversion means) 3040, a bonding unit (bonding means) 3050, a first recovery unit (first recovery means) 3060, a vacuum seal unit (vacuum seal means) 3070 and a second recovery unit (second recovery means) 3080. Hereafter, the above described configurations will be explained in order. Note that the battery manufacturing system 3100 further includes a control unit (not illustrated) for controlling the driving of each unit. The points A to G in Fig. 7 schematically show the positions of each processing unit. The points A to G corresponds to an electrode arrangement position, a separator bonding position, an inversion position, an electrode arrangement position, a bonding/first recovery position, a vacuum sealing position and a second recovery position respectively.

### <About transport jig>

As shown in Fig. 8, the transport jig 3010 (3010A, 3010B) includes a frame-shaped jig frame portion 3011 and a flexible transport film 3014 erected on the jig frame portion 3011. Although the details will be described later, the transport jig 3010 consists of a first transport jig (one transport jig) 3010A and a second transport jig (the other transport jig) 3010B and the same configuration is applied to both of them. Since the configuration is common, the cost can be reduced.

The jig frame portion 3011 has a rectangular frame shape when viewed from the Z-axis direction. The jig frame portion 3011 includes a pair of short side portions 3012 and a pair of long side portions 3013.

The transport film 3014 has a belt-shape when viewed from the Z-axis direction. The transport film 3014 is erected between the pair of short side portions 3012 by fixing both ends in the longitudinal direction (X-axis direction) to the pair of short side portions 3012. The transport film 3014 includes an adhesive layer 3015 for adhesively fixing the workpiece W (WA, WB) at least in the placement region of the workpiece W. Because of this, the workpiece W (WA, WB) can be easy attached and detached to and from the transport film 3014. Furthermore, since both end portions of the transport film 3014 in the short direction (Y-axis direction) are separated from the pair of long side portions 3013, the transport film 3014 having flexibility can be bent relatively easily in the Z-axis direction. As a result, as will be described in detail later, in the first recovery unit 3060 and the second recovery unit 3080, the bending of the transport film 3014 can be utilized to smoothly separate the workpiece W (WA, WB) from the adhesive layer 3015 of the transport film 3014.

The transport film 3014 of the present embodiment includes the adhesive layer 3015 at least in the placement region of the workpiece W (WA, WB). However, the present invention is not limited to the above described configuration. For example, the adhesive layer 3015 may be provided over the entire surface including the placement region of the workpiece W (WA, WB). The transport film 3014 of the present embodiment may have the adhesive layer 3015 made of a material that is easily peelable in order to smoothly separate the workpiece W from the adhesive layer 3015. Furthermore, the transport film 3014 of the present embodiment may have the adhesive layer 3015 with thermosensitivity for smooth attachment and detachment of the workpiece W to and from the adhesive layer 3015 and the temperature control may be performed during attachment and detachment. Here, when the adhesive layer 3015 has thermosensitivity, the adhesive layer 3015 may have cool-off or warm-off function. For example, when the thermosensitivity of the adhesive layer 3015 is cool-off, the adhesive force of the adhesive layer 3015 may be set relatively high by adjusting the ambient temperature higher, compressing by heated rollers (e.g., 60-80 °C) or heating by a heating unit (e.g., 110-140 °C) in the electrode arrangement unit (electrode arrangement means) 3020A, 3020B, the separator bonding unit 3030, the inversion unit 3040, the bonding unit 3050 and the vacuum seal unit 3070. On the other hand, the adhesive force of the adhesive layer 3015 may be set relatively low by adjusting the ambient temperature of the adhesive layer 3015 lower in the first recovery unit 3060 and the second recovery unit 3080.

The transport film 3014 of the present embodiment may have heat resistance so that the transport film 3014 can be used repeatedly. In addition, the transport film 3014 of the present embodiment includes the adhesive layer 3015 for adhesive fixing at least in the placement region of the workpiece W (WA, WB). However, the present invention is not limited to the above described configuration. For example, an insulator for electrostatic fixing such as a silicon-based material like silicone rubber may be adopted instead of the adhesive layer 3015. Here, when the insulator is adopted for the transport film 3014, it is possible to supply charged particles (e.g., anions or cations) to the insulator by an ionizer to increase the electrostatic attraction between the insulator and the workpiece W (WA, WB) in the electrode arrangement unit 3020A, 3020B, and supply charges necessary for charge neutralization to the insulator by the ionizer to reduce the electrostatic attraction between the insulator and the workpiece W (WA, WB) in the first recovery unit 3060 and the second recovery unit 3080. As a result, attachment and detachment of the workpiece W (WA, WB) to and from the transport film 3014 can be easily performed.

### <About electrode arrangement step>

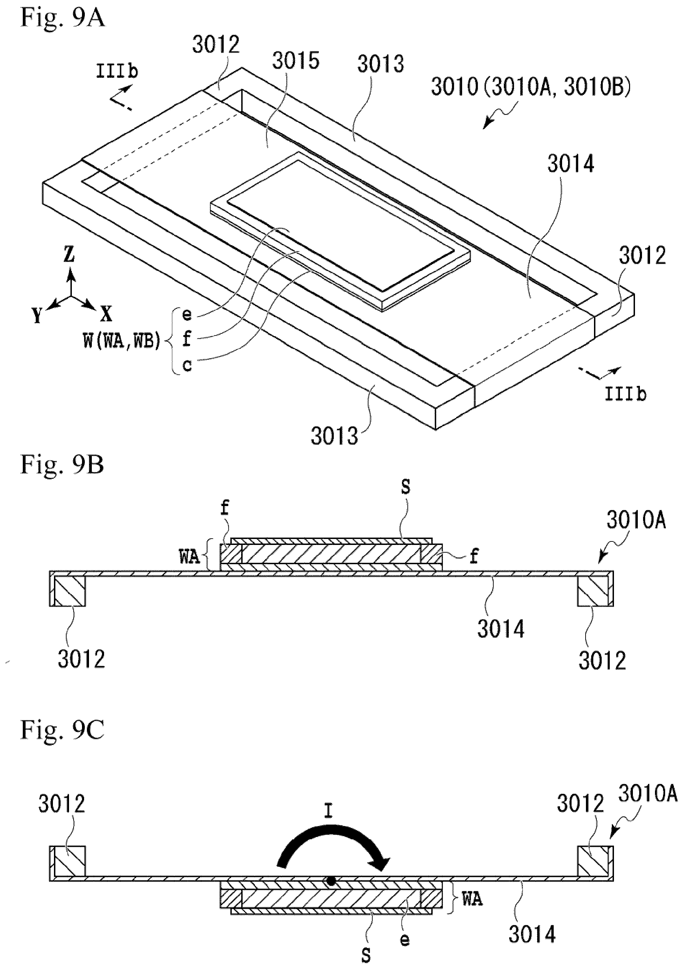

The electrode arrangement units 3020A, 3020B are located at electrode arrangement positions (shown as points A and D in Fig. 7). As shown in Fig. 9A, the battery electrodes (positive electrode WA, negative electrode WB) that are workpieces W are formed on the transport film 3014 of the transport jigs 3010 (3010A, 3010B). Note that Fig. 9A shows only the transport jig 3010 (3010A, 3010B) after the battery electrode (positive electrode WA, negative electrode WB) is formed for simplifying the explanation.

Specifically, the electrode arrangement units 3020A, 3020B fix the transport jigs 3010 (3010A, 3010B) on electrode arrangement stages (not illustrated) by vacuum suction, mechanical chuck or the like. After that, the electrode arrangement units 3020A, 3020B sequentially attach a rectangular current collector c and a rectangular frame-shaped frame body f onto the transport film 3014 of the transport jigs 3010 (3010A, 3010B) shown in Fig. 8 using heated rollers (not illustrated). At this time, the current collector c and the frame body f are arranged so that the outer edges of the current collector c and the frame body f coincide when viewed from the Z-axis direction.

Then, electrode active material is filled in the recess defined by the current collector c and the frame body f and the filled electrode active material is compressed by heated rollers (not illustrated) to form an electrode active material layer e. Then, the battery electrodes (positive electrode WA, negative electrode WB) that are workpieces W are formed on the transport film 3014 by applying the electrolyte solution to the compressed electrode active material layer e.

The battery manufacturing system 3100 includes an electrode arrangement unit 3020A that forms the positive electrode WA on the transport film 3014 of the first transport jig (one transport jig) 3010A, and an electrode arrangement unit 3020B that forms the negative electrode WB on the transport film 3014 of the second transport jig (the other transport jig) 3010B. The first transport jig 3010A on which the positive electrode WA is formed is transported to the separator bonding position (shown as point B in Fig. 7). The second transport jig 3010B on which the negative electrode WB is formed is transported to the bonding/first recovery position (shown as point E in Fig. 7).

### <About separator bonding process>

The separator bonding unit 3030 is located at the separator bonding position (shown as point B in Fig. 7) and the separator S is placed on the electrode active material layer e of the positive electrode WA formed on the transport film 3014 of the first transport jig 3010A as shown in Fig. 9B. Fig. 9B shows only the transport jigs 3010 (3010A, 3010B) after the separator S is placed on the electrode active material layer e of the positive electrode WA for simplifying the explanation.

Specifically, the separator bonding unit 3030 fixes the first transport jig 3010A on a separator bonding stage (not illustrated) by vacuum suction or mechanical chuck. After that, the separator bonding unit 3030 places the outer edge of the separator S having a rectangular shape on the frame body f of the positive electrode WA. At this time, the separator S completely covers the electrode active material layer e and the electrolyte solution soaks into the gap between the separator S and the electrode active material layer e by capillary action. As a result, the separator S is able to adhere closely to the electrode active material layer e.

### <About inversion process>

The inversion unit 3040 is located at the inversion position (shown as point C in Fig. 7) and the first transport jig 3010A is inverted as shown in Fig. 9C. Fig. 9C shows only the inverted first transport jig 3010A for simplifying the explanation.

Specifically, the inversion unit 3040 fixes the first transport jig 3010A on an inversion stage (not illustrated) by vacuum suction or mechanical chuck. After that, the inversion unit 3040 inverts the first transport jig 3010A around the Y-axis (arrow I direction) as shown in Fig. 9C. At this time, the separator S is adhered to the electrode active material layer e via the electrolyte solution. Thus, the separator S does not fall from the electrode active material layer e. Therefore, there is no need to transfer the positive electrode WA placed on the first transport jig 3010A to another transport jig. As a result, as will be described in detail later, the first transport jig 3010A can be used repeatedly from the electrode arrangement unit 3020A to the bonding unit 3050. Thus, costs can be reduced and production efficiency can be improved (shown as point A to point B to point C to point E to point A (repeated thereafter) in Fig. 7).

In the present embodiment, the adhesive force of the adhesive layer 3015 is set so that the positive electrode WA does not fall from the first transport jig 3010A when the first transport jig 3010A is inverted.

### <About bonding process>

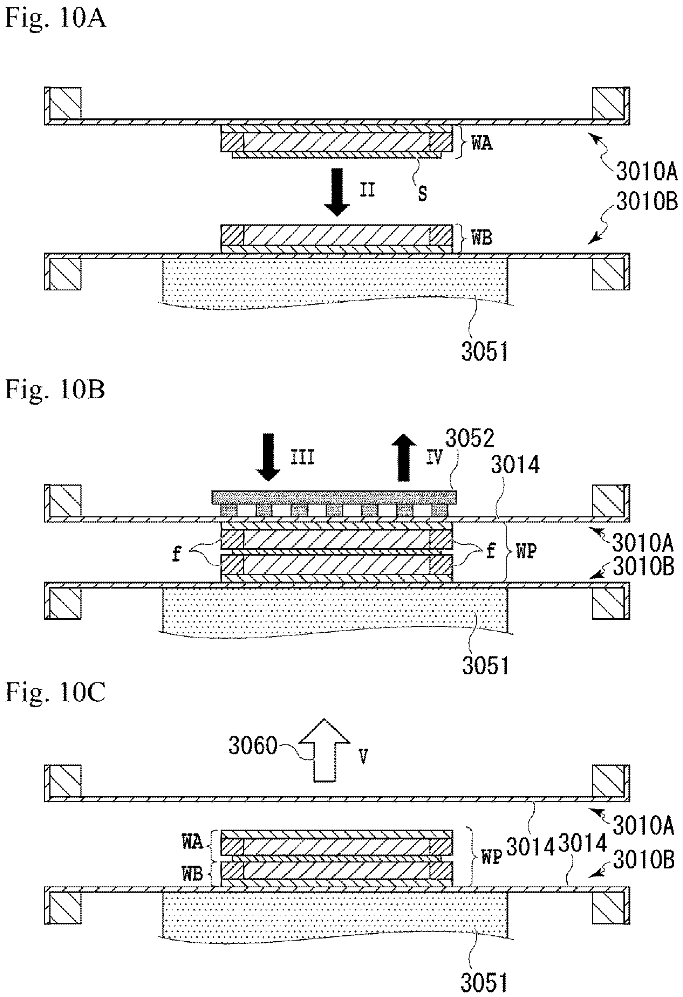

The bonding unit 3050 is located at the bonding/first recovery position (shown as point E in Fig. 7) and the positive electrode WA and the negative electrode WB are temporarily fixed and bonded in a state of facing each other by heat sealing as shown in Figs. 10A and 10B.

### (Bonding preparation process)

Specifically, the bonding unit 3050 fixes the second transport jig 3010B on an alignment stage 3051 by vacuum suction or mechanical chuck as shown in Fig. 10A. After the negative electrode WB of the second transport jig 3010B and the positive electrode WA of the inverted first transport jig 3010A are arranged to face each other, the first transport jig 3010A is moved in the Z-axis direction (arrow II direction) to bring the positive electrode WA and the negative electrode WB into contact via the separator S.

In the present embodiment, the arrangement of the first transport jig 3010A and the second transport jig 3010B is adjusted in the X-axis direction and/or Y-axis direction. Thus, the positioning of the positive electrode WA and the negative electrode WB can be easily performed so that the respective frame bodies f of the positive electrode WA and the negative electrode WB overlap when viewed from the Z-axis direction.

### (Bonding process)

Then, as shown in Fig. 10B, the first heating unit 3052 is moved in the Z-axis direction (arrow III direction) and the transport film 3014 of the first transport jig 3010A is pressed from above. At this time, the positive electrode WA and the negative electrode WB are sandwiched between the alignment stage 3051 and the first heating unit 3052. Then, the first heating unit 3052 is heated (e.g., 120-140 °C) at intervals along the outer peripheral edges of the pair of frame bodies f (pair of edge portions of the positive electrode WA and the negative electrode WB) extending in the direction (X-axis direction) in which the transport film 3014 is erected via the transport film 3014 of the first transport jig 3010A. The frame bodies f are melted by the above described temporary heat sealing and the frame bodies f of the positive electrode WA and the negative electrode WB are welded together at intervals to integrally form the bonded battery electrode WP. After that, the first heating unit 3052 is moved in the Z-axis direction (arrow IV direction).

### <About first recovery process>

The first recovery unit 3060 is located at the bonding/first recovery position (shown as point E in Fig. 7) and the first transport jig 3010A is separated from the bonded battery electrode WP on the second transport jig 3010B as shown in Fig. 10C and then the recovered first transport jig 3010A is transported to the electrode arrangement unit 3020A (shown as point E to point A in Fig. 7). In the above described embodiment, the recovered first transport jig 3010A is transported to the electrode arrangement unit 3020A. However, the present invention is not limited to the above described configuration. For example, considering work efficiency, the recovered first transport jig 3010A and the recovered second transport jig 3010B may be transported to either the electrode arrangement unit 3020A or the electrode arrangement unit 3020B.

Specifically, the first recovery unit 3060 moves the first transport jig 3010A in the Z-axis direction (arrow V direction) as shown in Fig. 10C. Thus, the transport film 3014 bends into a U-shape while reducing the adhesion area with the bonded battery electrode WP. Finally, the first transport jig 3010A can be separated from the bonded battery electrode WP. At this time, the heat sealing is performed at intervals along the frame bodies f of the positive electrode WA and the negative electrode WB extending in the direction (X-axis direction) in which the transport film 3014 is erected in the bonding unit 3050. Thus, the positive electrode WA can be prevented from peeling off from the negative electrode WB in a state that the positive electrode WA is stuck to the first transport jig 3010A. After that, the recovered first transport jig 3010A is transported to the electrode arrangement unit 3020A, which is an upstream process, by the transport line (not illustrated) connected to the electrode arrangement unit 3020A or automatic transport unit (AGV) (not illustrated).

In the present embodiment, the first transport jig 3010A can be used repeatedly from the electrode arrangement unit 3020A to the bonding unit 3050 without transferring the positive electrode WA that is the workpiece W. Thus, costs can be reduced and production efficiency can be improved. In addition, in the present embodiment, the transport of the first transport jig 3010A to the electrode arrangement unit 3020A is automated by the transport line or the automatic transport unit. Thus, production efficiency is improved. Furthermore, in the first transport jig 3010A of the present embodiment, the height of the pair of short side portions 3012 of the jig frame portion 3011 may be set lower than the height of the pair of long side portions 3013. As a result, the contact between the transport film 3014 of the lower first transport jig 3010A and the pair of short side portions 3012 of the upper first transport jig 3010A can be prevented even when the recovered first transport jigs 3010A are stacked. Namely, the recovered first transport jigs 3010A can be stored in a stacked state. Thus, the temporary storage space for the first transport jigs 3010A can be reduced.

### <About vacuum sealing process>

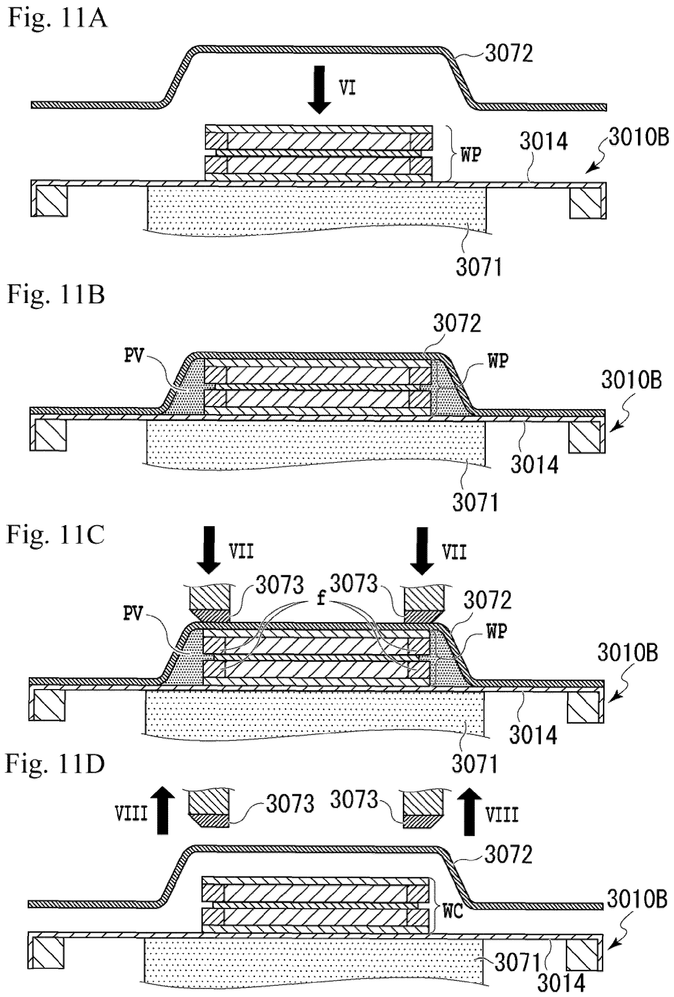

The vacuum sealing unit 3070 is located at the vacuum sealing position (shown as point F in Fig. 7) and the second transport jig 3010B is covered with a cover film 3072 and heat sealing is performed by a second heating unit 3073 along the entire periphery of the bonded battery electrode WP on the second transport jig 3010B under vacuum to form the battery cell as shown in Figs. 11A to 11D.

### (Vacuum sealing preparation process)

First, the vacuum sealing unit 3070 moves the cover film 3072 in the Z-axis direction (arrow VI direction) as shown in Fig. 11A and the second transport jig 3010B is covered with the cover film 3072 to define a vacuum chamber.

In the present embodiment, the cover film 3072 is made of a film having approximately same flexibility compared to that of the transport film 3014. The cover film 3072 may be a film having heat resistance so that the cover film 3072 can be used repeatedly. Furthermore, the cover film 3072 may have any shape as long as the cover film 3072 can cover the bonded battery electrode WP.

### (Vacuum drawing process)

Then, the vacuum sealing unit 3070 connects an exhaust path (not illustrated) connected to a vacuum pump or the like to the vacuum chamber defined by the transport film 3014 of the second transport jig 3010B and the cover film 3072 as shown in Fig. 11B, and vacuum drawing is performed by exhausting the gas in the vacuum chamber through the exhaust path. The vacuum pressure PV in the vacuum chamber is set to, for example, approximately -100 (kPa). The bonded battery electrode WP housed in the vacuum chamber is heat-sealed at intervals along the pair of frame bodies f extending in the X-axis direction in the bonding unit 3050. Thus, the gas can be exhausted from inside the bonded battery electrode WP through the non-heat-sealed portions of the frame bodies f.

### (Heat sealing process and post-vacuum sealing process)

Furthermore, as shown in Fig. 11C, the second heating unit 3073 is moved in the Z-axis direction (arrow VII direction). Thus, the cover film 3072 is pressed from above. The second heating unit 3073 has substantially the same shape as the frame body f when viewed from the Z-axis direction. The bonded battery electrode WP is sandwiched between the vacuum stage 3071 and the second heating unit 3073. Then, the second heating unit 3073 is heated (e.g., 110-140 °C). Thus, heating is continuously performed along the entire periphery of the frame bodies f of the bonded battery electrode WP via the cover film 3072. The above described heat sealing melts the frame bodies f and completely welds the frame bodies f of the bonded battery electrodes WP together to form a vacuum-sealed battery cell WC. After that, the inside of the vacuum chamber is opened to the atmosphere through the exhaust path, and the cover film 3072 and the second heating unit 3073 are moved in the Z-axis direction (arrow VIII direction) as shown in Fig. 11D.

In the present embodiment, the vacuum chamber is defined by the transport film 3014 of the second transport jig 3010B and the cover film 3072. Thus, robust and highly airtight vacuum chamber is not required separately. Therefore, the cost of the battery manufacturing system 3100 can be reduced and there is no need to transfer the bonded battery electrode WP from the second transport jig 3010B to the vacuum chamber or the like. In the present embodiment, the cover film 3072 is heated by the second heating unit 3073. However, the cover film 3072 is relatively thin and has relatively high heat dissipation. Therefore, sufficient cooling can be performed without using a special cooling device. Thus, cost reduction can be achieved and production efficiency can be improved.

### <About second recovery process>

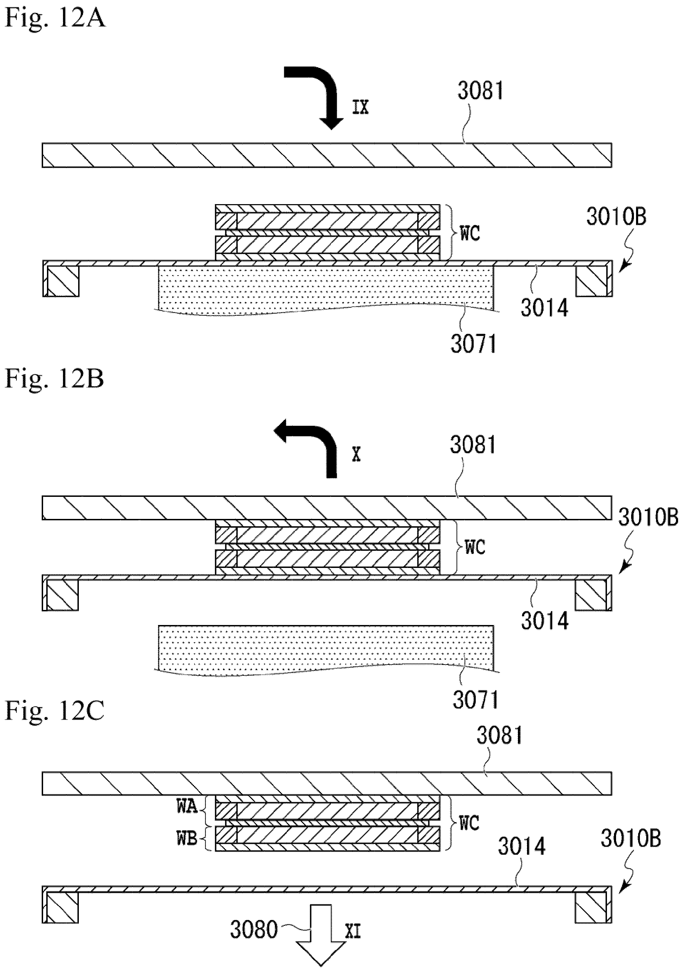

The second recovery unit 3080 is located at the second recovery position (shown as point G in Fig. 7) and the second transport jig 3010B is fixed to a suction fixing surface plate 3081 by suction via the battery cell WC as shown in Figs. 12A to 12C and then the second transport jig 3010B separated from the battery cell WC is transported to the electrode arrangement unit 3020B (shown as point G to point D in Fig. 7). The suction fixing surface plate 3081 includes a plurality of suction ports (not illustrated) on the lower surface of the suction fixing surface plate 3081 for vacuum suction of the battery cell WC. In the present embodiment, the recovered second transport jig 3010B is transported to the electrode arrangement unit 3020B. However, the present invention is not limited to the above described configuration. For example, considering work efficiency, the recovered first transport jig 3010A and the recovered second transport jig 3010B may be transported to either the electrode arrangement unit 3020A or the electrode arrangement unit 3020B.

### (Suction movement process)

The second recovery unit 3080 moves the second transport jig 3010B holding the battery cell WC from the vacuum sealing position (shown as point F in Fig. 7) to the second recovery position (shown as point G in Fig. 7) as shown in Figs. 12A and 12B. Specifically, the suction fixing surface plate 3081 is moved in the X-axis direction and Z-axis direction (arrow IX direction) to contact the upper surface of the battery cell WC. Then, the battery cell WC is fixed by suction to the lower surface of the suction fixing surface plate 3081 and then moved in the Z-axis direction and X-axis direction (arrow X direction).

### (Second recovery process)

The second recovery unit 3080 moves the second transport jig 3010B in the Z-axis direction (arrow XI direction) as shown in Fig. 12C. Thus, the transport film 3014 bends into an inverted U-shape while reducing the adhesion area with the battery cell WC. Finally, the second transport jig 3010B can be separated from the battery cell WC. At this time, the heat sealing is performed continuously along the entire periphery of the frame body f of the bonded battery electrode WP in the vacuum sealing unit 3070. Thus, it is possible to suppress the negative electrode WB from peeling off from the positive electrode WA in a state that the negative electrode WB is stuck to the second transport jig 3010B. After that, the recovered second transport jig 3010B is transported to the electrode arrangement unit 3020B, which is an upstream process, by the transport line (not illustrated) connected to the electrode arrangement unit 3020B or an automatic transport unit (AGV) (not illustrated).

In the present embodiment, the second transport jig 3010B can be used repeatedly from the electrode arrangement unit 3020B to the vacuum sealing unit 3070 without transferring the negative electrode WB that is the workpiece W, the bonded battery electrode WP and the battery cell WC. Thus, costs can be reduced and production efficiency can be improved. Furthermore, in the present embodiment, production efficiency is improved by automating the transport of the second transport jig 3010B to the electrode arrangement unit 3020B by the transport line or the automatic transport unit. Furthermore, in the second transport jig 3010B of the present embodiment, the height of the pair of short side portions 3012 of the jig frame portion 3011 may be set lower than the height of the pair of long side portions 3013. As a result, the contact between the transport film 3014 of the lower second transport jig 3010B and the pair of short side portions 3012 of the upper second transport jig 3010B can be prevented even when the recovered second transport jigs 3010B are stacked. Namely, stacked storage is enabled and the temporary storage space for the second transport jigs 3010B can be reduced.

### <Summary of embodiments>

Then, the invention-defining features constituting the present invention will be listed using the reference numerals and the like in the embodiments described above. It goes without saying that the following reference numerals and the like merely explain the constituent elements in the claims with reference to the description of the embodiments and do not limit the constituent elements to specific members and the like.
[1] A battery manufacturing system including:
   an electrode arrangement unit configured to arrange battery electrodes containing an electrolyte solution on two transport jigs respectively;
   a separator bonding unit configured to bond a separator with one of the battery electrodes held on one of the transport jigs;
   an inversion unit configured to invert one of the transport jigs;
   a bonding unit configured to bond one of the battery electrodes held on one of the transport jigs to the other of the battery electrodes held on the other of the transport jigs; and
   a first recovery unit configured to separate one of the transport jigs from the bonded battery electrodes on the other of the transport jigs and transport one of the transport jigs to the electrode arrangement unit, wherein
   the first recovery unit includes a transport line connected to the electrode arrangement unit or an automatic transport unit for transporting one of the transport jigs to the electrode arrangement unit.
[2] The battery manufacturing system according to [1], wherein
   the transport jigs include a jig frame portion and a transport film erected on the jig frame portion, the transport film having flexibility, and
   the transport film includes an adhesive layer for adhesive fixing or an insulator for electrostatic fixing in a region where the battery electrodes are placed.
[3] The battery manufacturing system according to [2], wherein the adhesive layer of the transport film has thermosensitivity.
[4] The battery manufacturing system according to [2], wherein the bonding unit is configured to perform a heat sealing at intervals along a pair of edge portions extending in a direction in which the transport film is erected in the bonded battery electrodes on the other of the transport jigs.
[5] The battery manufacturing system according to [1], the other of the transport jigs includes a vacuum seal unit configured to define a part of a vacuum chamber and heat seal an entire periphery of the bonded battery electrodes on the other of the transport jigs under vacuum to form a battery cell.
[6] The battery manufacturing system according to [1], further including a second recovery unit configured to separate the other of the transport jigs from the battery cell formed on the other of the transport jigs and transport the other of the transport jigs to the electrode arrangement unit.

The scope of the present invention is not limited to the illustrated and described exemplary embodiments. The present invention also includes all embodiments having the effects equivalent to those intended by the present invention. Furthermore, the scope of the present invention is not limited to combinations of features of the invention defined by each claim. The present invention can be defined by any desired combination of specific features among all disclosed respective features.

Although the embodiments of the present invention and the modification examples have been described above, each configuration and the combination of them in the embodiments and the modification examples are merely examples. Thus, additions, omissions, substitutions and other modifications of the configurations are possible within the scope not departing from the gist of the present invention. In addition, the present invention is not limited by the embodiments.

The present invention also relates to a manufacturing device of a lithium-ion battery described below where main constituent material of the lithium-ion battery is made of resin material. The manufacturing device of the lithium-ion battery may include the above described battery manufacturing device.

The lithium-ion battery having positive and negative electrodes constructed from the material containing resin material has widespread because it is easy to mass-produce, has high-performance characteristics and can adopt various shapes. For example, the lithium-ion battery with a separator interposed between the positive electrode material and the negative electrode material has been manufactured and mounted in various forms in recent years from small devices such as a flat mobile phone to large devices such as an electric vehicle.

When the manufacturing device of the lithium-ion battery adopts the structure of sandwiching the separator sheet between the positive electrode sheet material and the negative electrode sheet material, the positional accuracy is effective for improving the quality. Thus, Patent Document 8 discloses to interrupt the manufacturing operation when the positioning accuracy of various sheet materials decreases.

However, if the manufacturing operation is interrupted every time when the accuracy decreases as described in Patent Document 8, the manufacturing efficiency decreases as the manufacturing device stops. In addition, work efficiency and work environment may be worsen since the worker is forced to monitor the manufacturing operation constantly with tension.

Therefore, the present invention aims to provide a manufacturing device of a lithium-ion battery capable of maintaining appropriate positional accuracy to improve the work efficiency and the work environment.

To solve the above described problem, a manufacturing device of a lithium-ion battery according to an embodiment of the present invention is the manufacturing device of the lithium-ion battery in which a positive electrode sheet material and a negative electrode sheet material are joined in a state of being stacked facing each other while interposing a separator sheet, the manufacturing device including: an identification information acquisition device unit configured to acquire an identification information of each of the positive electrode sheet material and the negative electrode sheet material; a position information acquisition device unit configured to acquire a position information of each of the positive electrode sheet material and the negative electrode sheet material; a transport device unit configured to transport each of the positive electrode sheet material, the negative electrode sheet material and the separator sheet to a stacking position; a joining device unit configured to join the positive electrode sheet material and the negative electrode sheet material that are transported to the stacking position and stacked while sandwiching the separator sheet; and a control device unit configured to control various device units so as to coordinate the entire manufacturing device, wherein the control device unit is configured to receive various information from the identification information acquisition device unit and the position information acquisition device unit, adjust a transport amount of each of the positive electrode sheet material and the negative electrode sheet material and perform a joining process by the joining device unit at an appropriate stacking position, and the control device unit is configured to update and adjust the transport amount set to each of the positive electrode sheet material and the negative electrode sheet material to be transported by the transport device unit to a value necessary for transporting each of the positive electrode sheet material and the negative electrode sheet material to the appropriate stacking position.

Thus, according to one aspect of the present invention, it is possible to acquire the identification information and the position information of the positive electrode sheet material and the negative electrode sheet material that are transported to the stacking position and joined and update and adjust the transport amount to enable the processing at an appropriate stacking position based on the acquired information. Consequently, it is possible to ensure (maintain) the positional accuracy of the positive electrode sheet material and the negative electrode sheet material facing each other while interposing the separator sheet between them.

Accordingly, it is possible to provide a manufacturing device of a lithium-ion battery capable of performing the transporting/joining process with high quality and improving the work efficiency and work environment by reducing the interruption of the manufacturing device and the forcement of the monitoring work.

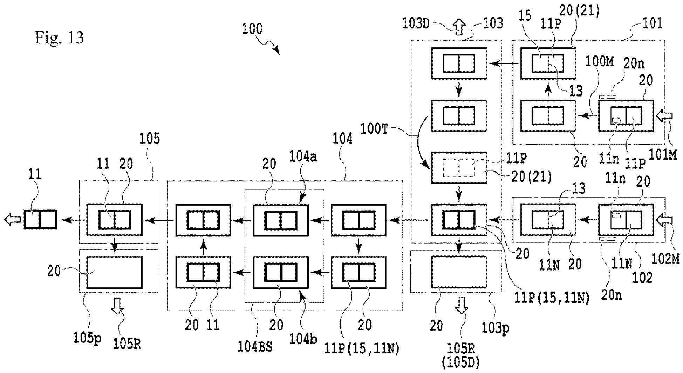

Hereinafter, embodiments of the present invention will be explained in detail with reference to the drawings. Figs. 13 to 33 are diagrams showing the manufacturing device of the lithium-ion battery according to an embodiment of the present invention.

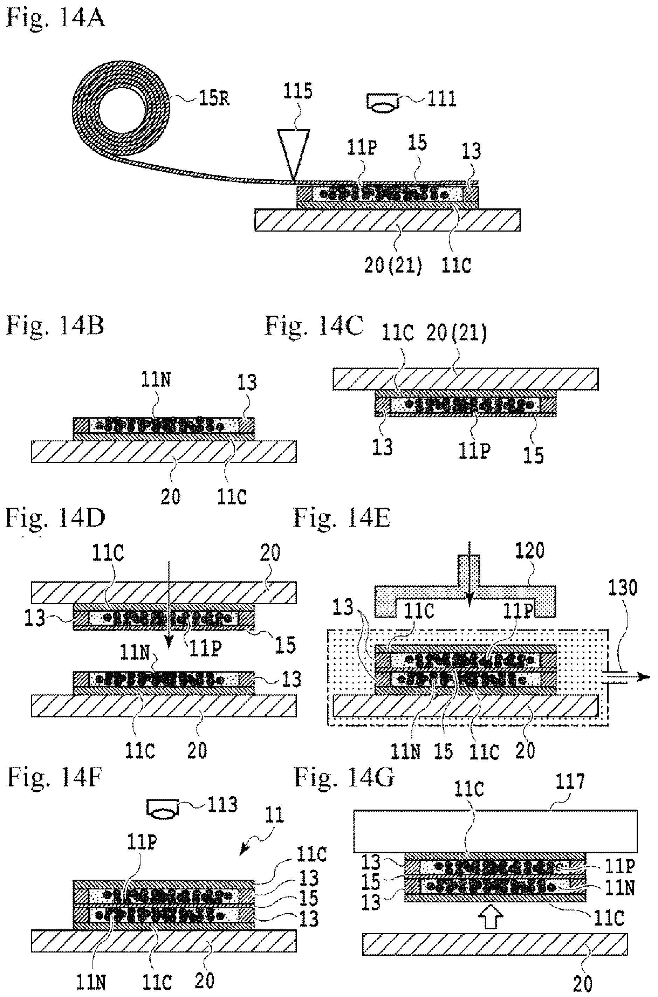

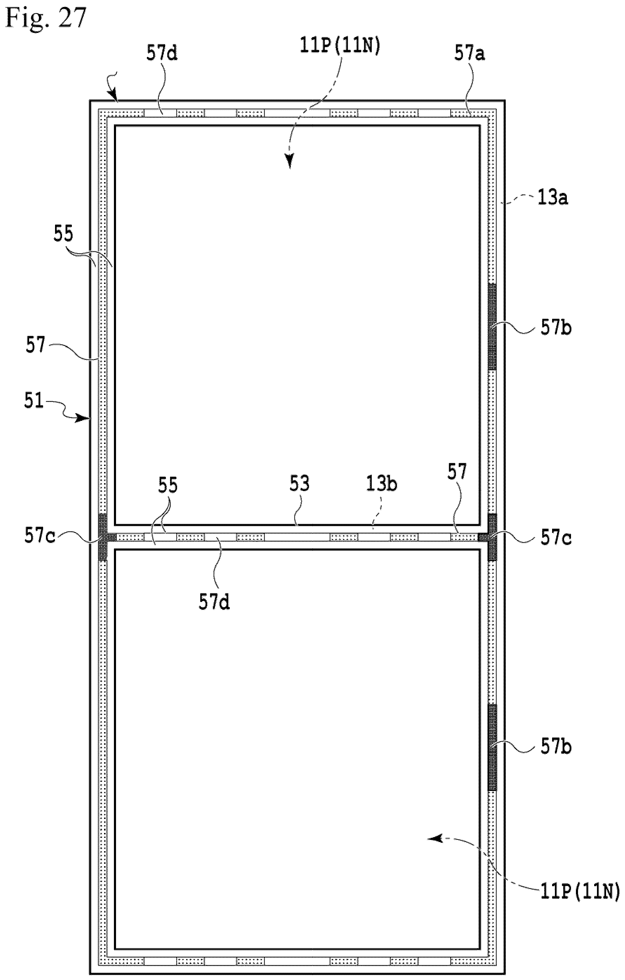

In Figs. 13 and 14, a manufacturing device 100 of a lithium-ion battery is formed in two rectangle shapes in which a positive electrode sheet material 11P and a negative electrode sheet material 11N each having a resin current collector 11C arranged in parallel, and a bonding/sealing process is automated by moving the positive electrode sheet material 11P and the negative electrode sheet 11N while being surrounded by the frame body (frame-shaped sealing material) 13 and held by a transport jigs 20. In the bonding/sealing process of the manufacturing device 100, the sealing is performed by stacking and bonding the positive electrode and the negative electrode with a separator interposed between the positive and negative electrodes. Here, the positive electrode sheet material 11P and the negative electrode sheet material 11N are formed in two rectangular shapes surrounded by the frame body 13, and are manufactured to be usable by being divided into two after the bonding/sealing process. The frame body 13 is formed to have a rectangular outer circumference portion 13a and a transverse portion 13b that crosses the middle of the outer circumference portion 13a (shown in Fig. 27).

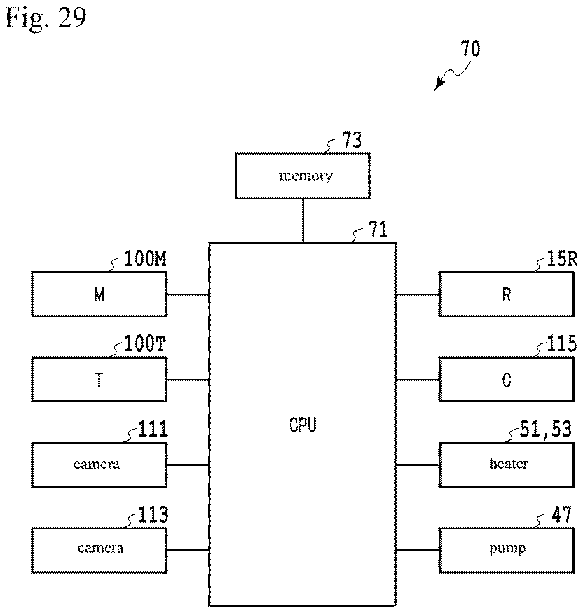

The manufacturing device 100 receives and transports the transport jig 20 supporting the positive electrode sheet material 11P and the transport jig 20 supporting the negative electrode sheet material 11N, which are manufactured in upstream manufacturing device (not illustrated) that executes the electrode formation process in the previous stage, at various work locations 101 to 105 respectively as shown by arrows 101M and 102M in the figure. The positive electrode sheet material 11P and the negative electrode sheet material 11N are manufactured into a semi-finished product 11 in a stacked state and sealed state facing each other while sandwiching a separator sheet 15 described later and delivered to downstream manufacturing device (not illustrated). Namely, a transport device (motor 100M and motor 100T of the inversion device shown in Fig. 29) together with the transport jig 20 constitute the transport device unit for transporting the positive electrode sheet material 11P and the negative electrode sheet material 11N.

To explain briefly, the manufacturing device 100 sequentially transports the transport jig 20 to the work locations 101 to 105 to perform various process operations on the positive electrode sheet material 11P and the negative electrode sheet material 11N.

First, at the work location 101, as shown in Fig. 14A, the positive electrode sheet material 11P formed and adhered to the surface of the support sheet (electrode support member) 21 of the transport jig 20 is received, then a positive electrode/separator bonding process is performed by bonding and cutting the separator sheet 15 drawn from a separator roll 15R and cut by a cutter 115 to the upper surface of the positive electrode sheet material 11P at an appropriate position, and then the positive electrode sheet material 11P is transferred to the next work location 103. Namely, the separator roll 15R constitutes the transport device unit and a sheet support member for the separator sheet 15. At the work location 101 (positive electrode/separator bonding process), before bonding the positive electrode sheet material 11P and the separator sheet 15, an inspection process described later is performed for extracting and determining the position of the positive electrode sheet material 11P itself and the bonding position with the separator sheet 15 by image processing of photographed images from a camera (photographing device unit) 111 and then the positive electrode sheet material 11P is transferred to the next process (work location 103). In the present embodiment, the case of bonding the separator sheet 15 with the positive electrode sheet material 11P is described as an example. However, it goes without saying that the above described process can be also applied to the case of bonding the separator sheet 15 with the negative electrode sheet material 11N.

At the work location 102, as shown in Fig. 14B, the negative electrode sheet material 11N formed and adhered to the surface of the support sheet 21 of the transport jig 20 is received and transferred directly to the next process (work location 103).

At the work location 103, as shown in Fig. 14C, the transport jig 20 supporting the positive electrode sheet material 11P transferred from the work location 101 is received and inverted upside down (shown by arrow 100T in the figure). Then, as shown in Fig. 14D, the transport jig 20 is transported to the receiving position of the transport jig 20 supporting the negative electrode sheet material 11N transferred from work location 102 and lowered to perform a positive electrode/negative electrode bonding/stacking process for creating the stacked state of the positive electrode sheet material 11P and the negative electrode sheet material 11N with the separator sheet 15 sandwiched between them. After that, at the work location 103, the transport jig 20 of the positive electrode sheet material 11P side is removed from the transport jig 20 of the negative electrode sheet material 11N side, and the transport jig 20 supporting the stacked sheet materials 11P, 11N are transferred to the work location 104. At the work location 103 (positive electrode/negative electrode bonding/stacking process), the positive electrode sheet material 11P and the negative electrode sheet material 11N are also transferred to the next process (work location 104) after performing the inspection process described later for extracting and determining the bonding (stacking) position of the positive electrode sheet material 11P and the negative electrode sheet material 11N by image processing of photographed images from a not-illustrated camera (photographing device unit) similar to camera 111. The transport jig 20 removed from the positive electrode sheet material 11P side at the work location 103 is carried out from the carry-out position 103p of the work location 103 and automatically transferred to the upstream manufacturing device that executes the electrode formation process for forming the positive electrode sheet material 11P on the surface of the support sheet 21 so that the transport jig 20 is repeatedly used.

At the work location 104, as shown in Fig. 14E, the transport jig 20 transferred from the work location 103 is received, and a positive electrode/negative electrode close contact sealing process described later is performed by creating a decompressed environment around the positive electrode sheet material 11P and the negative electrode sheet material 11N in a stacked state sandwiching the separator sheet 15 supported on the support sheet 21 to degas and bring the positive electrode sheet material 11P and the negative electrode sheet material 11N into close contact and then thermally fusing and sealing between the frame bodies 13 of the sheet materials 11P, 11N. At the work location 104 (positive electrode negative electrode close contact sealing process), as shown in Fig. 14F, the positive electrode sheet material 11P and the negative electrode sheet material 11N are transferred to the next process (work location 105) after performing the inspection process on the thermal fusion state of the positive electrode sheet material 11P and the negative electrode sheet material 11N by image processing of photographed images from the camera 113.

Here, at the work location 104, the transport jigs 20 transferred from the work location 103 are sequentially received at two locations and transported in parallel so that the positive electrode/negative electrode close contact sealing process can be performed simultaneously at the processing positions 104a and 104b. Specifically, on the upstream side of the processing positions 104a and 104b, the preceding transport jig 20 is received and slid to the side and the following transport jig 20 is received to form two rows. Then, the transport jigs 20 are simultaneously received and the process is performed, and then the following transport jig 20 is transferred to the next work location 105 on the downstream side, and then the preceding transport jig 20 is slid back to the opposite side and continuously transferred to the next work location 105.

As a result, at the work location 104, since the positive electrode/negative electrode close contact sealing process that performs thermal fusion along with degassing requires a certain amount of time, multiple times of before and after processes (positive electrode/negative electrode bonding/stacking process and semi-finished product carry-out process described later) can be sufficiently performed. Thus, various processes can be efficiently executed without wasteful waiting. It goes without saying that the positive electrode negative electrode bonding/stacking process may be performed at the work location 104 one by one without parallel processing, similar to other processes.

At the work location 105, as shown in Fig. 14G, the semi-finished product 11 in which the positive electrode sheet material 11P and the negative electrode sheet material 11N are closely stacked and sealed sandwiching the separator sheet 15 is removed from the transport jig 20 by being sucked by a transfer device 117 and delivered to the downstream manufacturing device. At the work location 104 as well, the transport jig 20 from which the semi-finished product 11 is removed is carried out from the carry-out position 105p of the work location 105 and automatically transferred to the upstream manufacturing device that executes the electrode formation process for forming the negative electrode sheet material 11N on the surface of the support sheet 21 so that the transport jig 20 is repeatedly used.

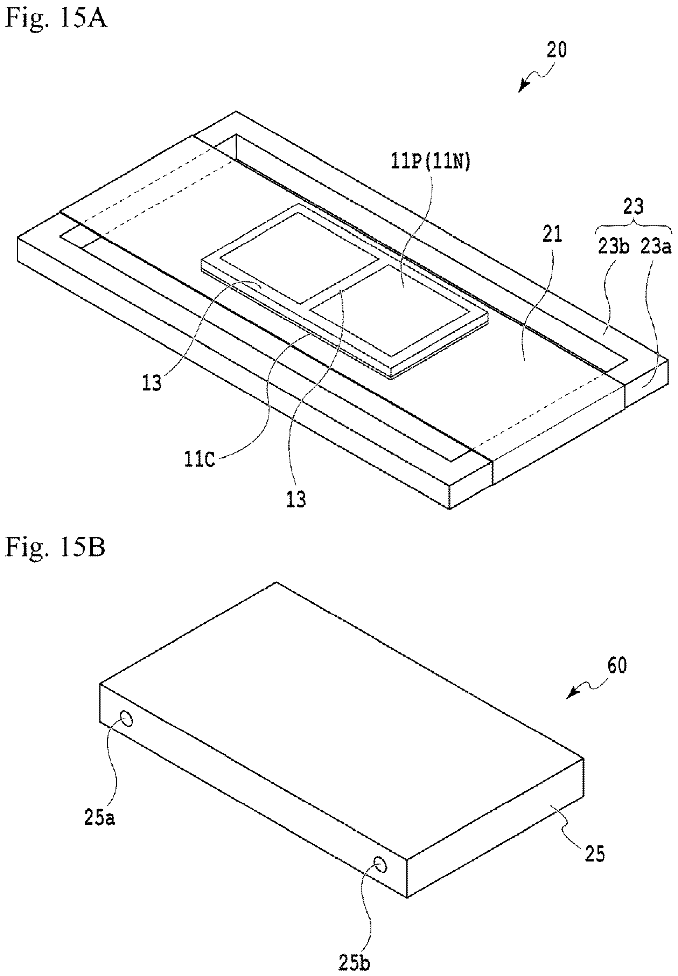

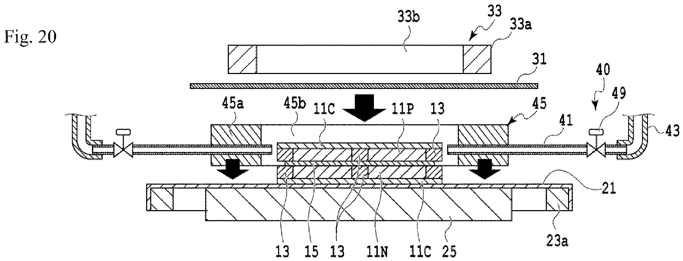

Specifically, as shown in Figs. 15A and 20, the transport jig 20 has the support sheet 21 that supports the positive electrode sheet material 11P or the negative electrode sheet material 11N (only 11P is shown) by adhesion attached to a rectangular transport frame member 23. The support sheet 21 is formed of a flexible sheet material in a belt-shape and attached to the transport frame member 23 in a detachable and replaceable manner as appropriate. The transport frame member 23 is formed in a rectangular shape having short side portions 23a and long side portions 23b. The support sheet 21 is wound around each of the short side portions 23a and bridged in parallel with the long side portions 23b.

As shown in Figs. 15B and 20, the transport jig 20 is configured such that a rectangular thick plate-shaped support plate 25 smaller than the rectangular transport frame member 23 fits into the transport frame member 23 from below and cooperates with the transport frame member 23 to support the sheet materials 11P, 11N via the support sheet 21. The support plate 25 constitutes a cooling device 60 together with a cooling plate 61 as described later.

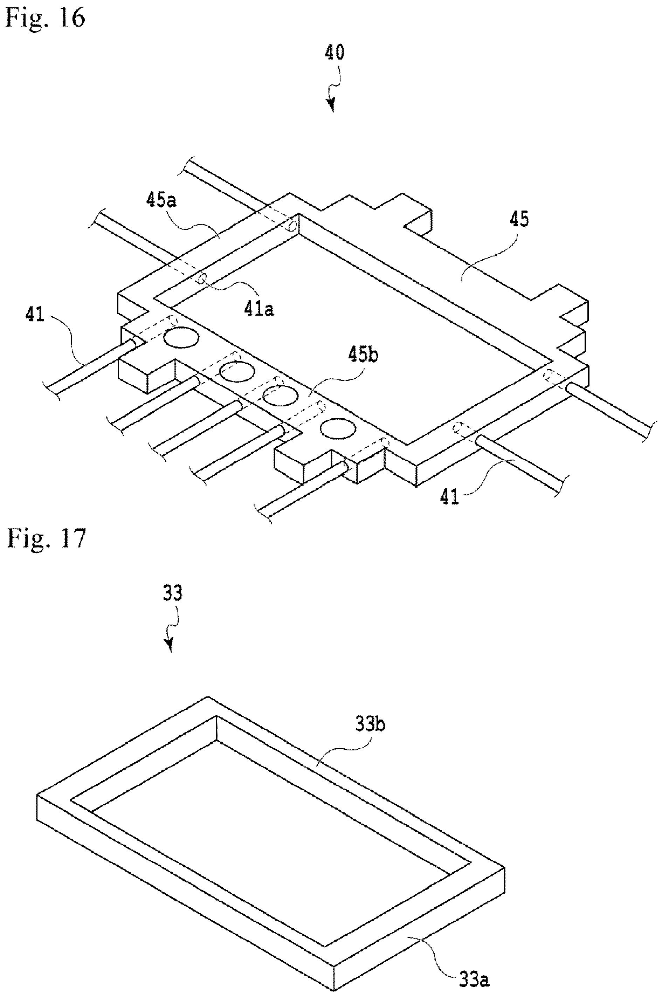

As shown in Figs. 16 and 20, the transport jig 20 cooperates with a suction frame member 45 that is smaller than the rectangular transport frame member 23 and formed in a substantially rectangular thin plate shape that is thicker than the stacked sheet materials 11P, 11N on the support sheet 21. The suction frame member 45 surrounds the stacked sheet materials 11P, 11N and sandwiches the support sheet 21 between the suction frame member 45 and the support plate 25. As described later, the suction frame member 45 has a plurality of suction pipes 41 embedded in the short side portions 45a and long side portions 45b to constitute a suction device (decompression device unit) 40 together with the support plate 25 and including a large sheet 31 and a pressing frame member 33.

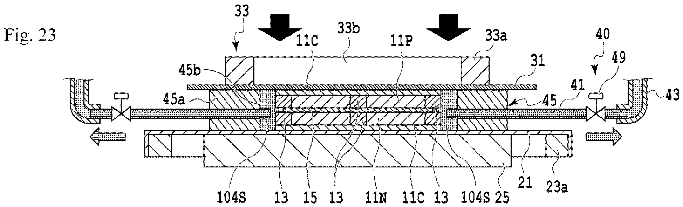

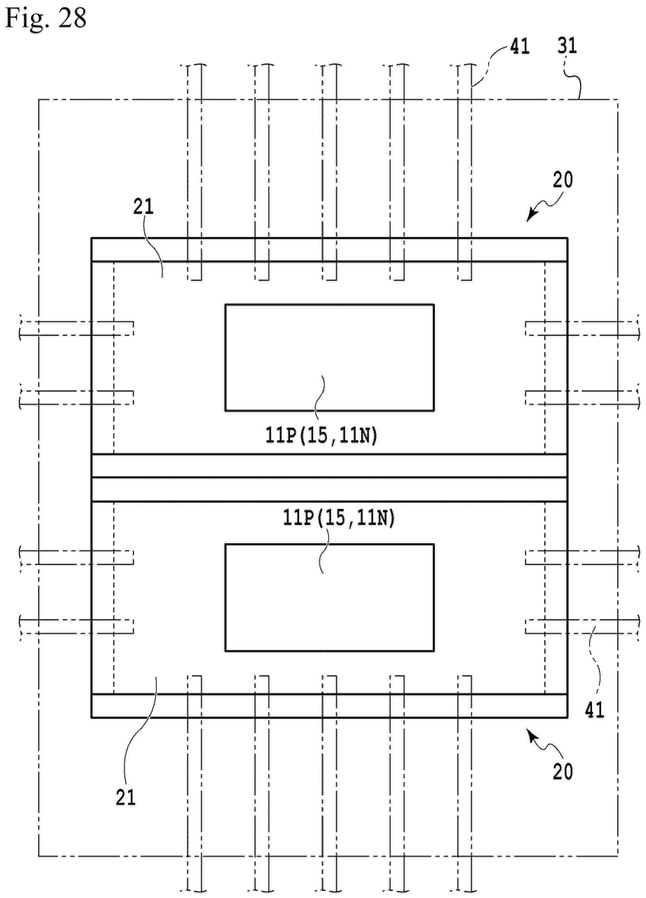

As shown in Figs. 17 and 23, the transport jig 20 cooperates with a large sheet 31 (shown in Fig. 28) covered on the suction frame member 45 and a rectangular pressing frame member 33 overlapping on the suction frame member 45. A housing space 104S is formed for airtightly housing the stacked sheet materials 11P, 11N within the suction frame member 45 between the sheets 21, 31 by sandwiching the suction frame member 45 between the support sheet 21 and the large sheet 31 and pressing with the pressing frame member 33. Namely, the large sheet 31 constitutes a cover member that forms the housing space 104S, and the suction frame member 45 (suction pipe 41) constitutes a suction device unit that suctions the inside of the housing space 104S. The pressing frame member 33 also has short side portions 33a and long side portions 33b that overlap the short side portions 45a and the long side portions 45b of the suction frame member 45.

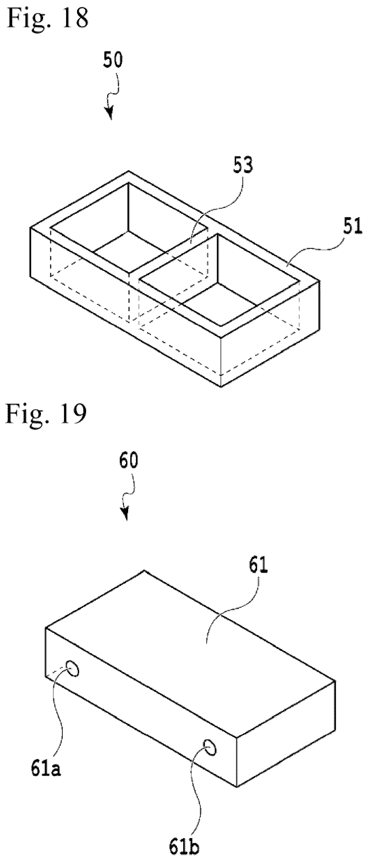

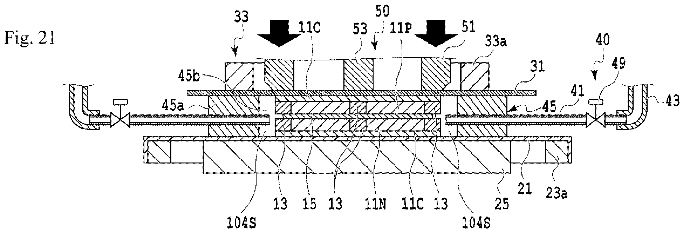

Here, as shown in Figs. 18 and 21, the manufacturing device 100 of the present embodiment has heaters 51, 53 formed in a frame shape smaller than the rectangular pressing frame member 33 and positioned on the frame bodies 13 of the stacked sheet materials 11P, 11N in the housing space 104S sandwiched between the support sheet 21 and the large sheet 31 and pressed toward the support plate 25 at the work location 104. The heaters 51, 53 constitute a heating device 50 described later.

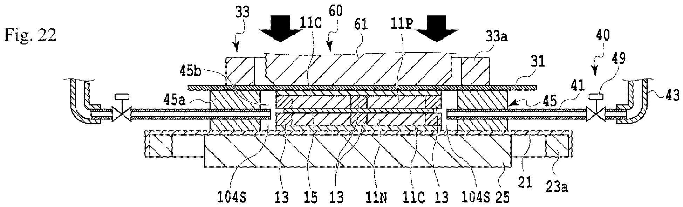

Similarly, as shown in Figs. 19 and 22, the manufacturing device 100 has a cooling plate 61, which constitutes a cooling device 60 together with the support plate 25, formed in a rectangular thick plate shape smaller than the rectangular pressing frame member 33 and positioned on the frame bodies 13 of the stacked sheet materials 11P, 11N in the housing space 104S sandwiched between the support sheet 21 and the large sheet 31 and pressed toward the support plate 25 at the work location 104.

At the work location 104, as shown in Figs. 20 to 26, the suction device 40, the heating device 50 and the cooling device 60 are arranged to enable the execution of the positive electrode/negative electrode close contact sealing process. At the work location 104, the stacked sheet materials 11P, 11N adhesively supported on the support sheets 21 of the two sets of transport jigs 20 positioned at processing positions 104a, 104b are positioned in the airtight housing space 104S formed on the support sheets 21. Thus, the suction decompression process by the suction device 40, the heating process by the heating device 50 and the cooling process by the cooling device 60 are appropriately applied. Thus, the positive electrode negative electrode close contact sealing process is performed to thermally fuse and seal between the respective frame bodies 13.

Specifically, as shown in Figs. 20 to 26, the suction device 40 forms the housing space 104S for the stacked sheet materials 11P, 11N by sandwiching the suction frame member 45 between the support sheet 21 of the transport jig 20 and the large sheet 31 to function as a cavity that creates a decompressed environment inside the housing space 104S by supporting the lower surface side of the support sheet 21 with the support plate 25 while pressing the large sheet 31 on the suction frame member 45 with the pressing frame member 33.

The suction device 40 has the suction pipe 41 connected to a tube 43 connected to a not-illustrated suction pump 47 (shown in Fig. 29) to enable suction operation inside the housing space 104S. The suction pipe 41 has an opening/closing valve 49 installed on the tube 43 side to enable opening and closing of the suction path. As shown in Fig. 20, the suction pipe 41 of the suction device 40 is embedded to cross the suction frame member 45 from the outer periphery and has a tip portion (suction port) 41a opening into the housing space 104S. The opening/closing valve 49 is installed on the outer periphery side of the tip portion 41a to connect the housing space 104S to the suction pump side in a communicable and blockable manner.

In the suction device 40, the transport jigs 20 are arranged in parallel at the work location 104 to perform the positive electrode/negative electrode close contact sealing process. Thus, the transport jigs 20 are arranged with one long side portion 23b in close proximity as shown in Fig. 28. Therefore, the suction pipes 41 of the suction frame member 45 are not arranged on the long side portion 45b on the adjacent inner side of the transport jig 20, but are arranged in five rows in parallel on the opposite outer long side portion 45b and in at least two rows in parallel on each of the short side portions 45a on both sides.

In the heating device 50, the positive electrode sheet material 11P and the negative electrode sheet material 11N, which are arranged in parallel, are surrounded by the outer circumference portion 13a and the transverse portion 13b of the frame body 13 to form two rectangles. As shown in Fig. 27, the heating device 50 includes an outer circumference heater 51 corresponding to the outer circumference portion 13a of the frame body 13 surrounding the outer periphery of the two rectangles and a transverse heater 53 crossing the center of the outer peripheral portion 13a between the two rectangles. The outer peripheral heater 51 and transverse heater 53 of the heating device 50 are positioned inside the pressing frame member 33 within the transport frame member 23 of the transport jig 20, and located on the frame body 13 of the stacked sheet materials 11P, 11N in the housing space 104S between the support sheet 21 and the large sheet 31 to generate heat while being pressed against the support plate 25.

The heating device 50 has heater functions embedded in outer regions 55 on both sides in the extension direction of the outer peripheral heater 51 and the transverse heater 53 for simultaneously energizing the entire circumference for uniform heating. The heating device 50 is manufactured to thermally fuse the entire circumference between the frame bodies 13 of the stacked sheet materials 11P, 11N. The inner regions 57 sandwiched by the outer regions 55 of the heaters 51, 53 have heater functions embedded for energizing the intermittently formed individual locations (partial ranges) 57a to 57d without being overheated when overlapped with the outer regions 55. The heater functions are configured to thermally fuse the partial ranges between the frame bodies 13 of the stacked sheet materials 11P, 11N.

The heating device 50 can perform the heating operation by dividing the energization range into small regions in the individual locations 57a to 57d in the inner regions 57 of the heaters 51, 53 and selecting energization or power cutoff for each region. For example, the range of thermal fusion between the frame bodies 13 (13a, 13b) of the stacked sheet materials 11P, 11N can be appropriately selected to form thermally fused locations and non-thermally fused locations by selectively energizing or cutting power to the individual locations 57a to 57d in the inner regions 57. Namely, the outer regions 55 of the heaters 51, 53 of the heating device 50 constitute a joining device unit that functions as a permanent joining device unit, and the individual locations 57a, 57b, 57c, 57d of the inner regions 57 of the heaters 51, 53 of the heating device 50 constitute a joining device unit that functions as a temporary joining device unit. The individual locations 57a, 57b, 57c, 57d of the inner regions 57 may be made to function not only by a structure that functions by energization/power cutoff but also by attaching and detaching the heater structure. Here, the heating device 50 of the present embodiment is described as an example where the outer regions 55 and the inner regions 57 of the heaters 51, 53 function as the permanent joining device unit and the temporary joining device unit at the work location 104. However, the present invention is not limited to the above described configuration. According to the work environment and the work conditions, it is possible to adopt the structure that uses the outer regions 55 and the inner regions 57 interchangeably as separate devices or to install separate devices to function at separate work locations, for example.

As shown in Fig. 15B, the cooling device 60 has a water inlet 25a and a water outlet 25b arranged in the support plate 25 that supports the support sheet 21 of the transport jig 20 so that cooling water is circulated in the support plate 25. A circulation path (not illustrated) formed between the water inlet 25a and the water outlet 25b is formed to cool a range wider than at least the facing region of the frame bodies 13 (13a, 13b) of the stacked sheet materials 11P, 11N supported from below via the support sheet 21. The support plate 25 may be manufactured in a honeycomb structure to reduce weight while ensuring strength, since it is sufficient to have a cooling water circulation path on the upper surface side.

As shown in Fig. 19, the cooling device 60 also includes a cooling plate 61 that is constructed together with the support plate 25 and positioned on the frame bodies 13 of the stacked sheet materials 11P, 11N in the housing space 104S on the support sheet 21 via the large sheet 31 and pressed toward the support plate 25, instead of the heaters 51, 53 of the heating device 50. Similar to the support plate 25, the cooling plate 61 has a water inlet 61a and a water outlet 61b arranged inside to enable circulation of cooling water. A circulation path (not illustrated) is formed between the water inlet 61a and the water outlet 61b to cool a range wider than at least the facing region of the frame bodies 13 (13a, 13b) of the stacked sheet materials 11P, 11N pressed from above via the large sheet 31. The cooling plate 61 may also be manufactured in a honeycomb structure to reduce weight while ensuring strength, since it is sufficient to have a cooling water circulation path on the lower surface side.

The positive electrode/negative electrode close contact sealing process at the work location 104 will be explained in detail. First, as the positioning process, as shown in Fig. 20, the transport jigs 20 are received from the work location 103 and slid directly to the adjacent work location 104BS to be positioned at two locations on the support plate 25 where various processes are performed.

After this, one large sheet 31 is covered together with the two sets of suction frame members 45 so that the stacked sheet materials 11P, 11N on the support sheets 21 of the two sets of transport jigs 20 are positioned inside, and the large sheet 31 is pressed by the pressing frame member 33 against the support plate 25 via the suction frame member 45 and the support sheet 21 to airtightly form the housing space 104S that houses the stacked sheet materials 11P, 11N.

Then, as the temporary joining process, as shown in Fig. 21, the heaters 51, 53 of the heating device 50 descend to press the upper surface of the large sheet 31. Thus, the frame bodies 13 of the stacked sheet materials 11P, 11N are brought into close contact with desired contact pressure. Then, the individual locations 57a to 57c in the inner regions 57 of the heaters 51, 53 are energized to thermally weld and temporarily join the sheet materials 11P, 11N. At this time, the individual location 57d of the heaters 51, 53 is de-energized to form non-joined locations (suction targets) and fix the relative positions between the stacked sheet materials 11P, 11N at intermittent joining locations while ensuring communication with the housing space 104S.

Here, after the temporary joining process, as shown in Fig. 22, the frame bodies 13 of the stacked sheet materials 11P, 11N are forcibly cooled by separating and retracting the individually energized and heated heaters 51, 53 from the large sheet 31, replacing the heaters 51, 53 with the cooling plate 61, sandwiching the sheet materials 11P, 11N between the cooling plate 61 and the support plate 25 via the support sheet 21 and large sheet 31 and flowing cooling water. Thus, early start of the next process is enabled while maintaining the device at a constant temperature.

Then, as the decompression process, as shown in Fig. 23, the suction pump 47 (not illustrated) of the suction device 40 is activated, the opening/closing valve 49 is opened, and the inside of the housing space 104S between the support sheet 21 and the large sheet 31 is suctioned via the suction pipe 41 to create a decompressed state. Thus, air between the stacked sheet materials 11P, 11N is exhausted from the non-joined locations of the frame bodies 13. Thus, the stacked sheet materials 11P, 11N are in close contact with the separator sheet 15 and high-quality stacked state is ensured.

In the above described decompression process, the frame bodies 13 of the stacked sheet materials 11P, 11N in the housing space 104S are intermittently and temporarily joined by the heaters 51, 53 and the relative positions are fixed. Thus, the positional displacement between the stacked sheet materials 11P, 11N can be prevented. In addition, quality deterioration of the constituent materials and the shape accuracy of the positive electrode sheet material 11P and the negative electrode sheet material 11N can be prevented in advance. The heaters 51, 53 energize the individual locations 57a to 57c to temporarily join the frame bodies 13 on the long side of the stacked sheet materials 11P, 11N, while de-energizing the individual location 57d to form intermittent non-joined locations on the frame bodies 13 on the short side. Thus, the direct suction between the stacked sheet materials 11P, 11N from the suction pipes 41 approaching on the long side 45b of the suction frame member 45 can be avoided, while the suction can be gradually performed from the suction pipes 41 of the separated short sides 45a and further from the suction pipes 41 of the further separated long sides 45b without being affected. Here, the heaters 51, 53 may de-energize the individual location 57b corresponding to the inner long side 45b without suction pipes 41 between the pair of suction frame members 45 to ensure communication with the housing space 104S to enable decompression with little effect. In addition, the individual location 57c may also be de-energized appropriately. Furthermore, in the decompression process by the suction device 40, it goes without saying that the suction amount (suction force) of the suction pump 47 (not illustrated) that is activated may be gradually increased to minimize the effects of the suction process as much as possible.

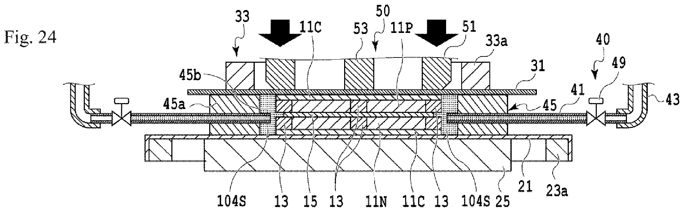

Then, as the permanent joining process, as shown in Fig. 24, the heaters 51, 53 of the heating device 50 descend again to press the upper surface of the large sheet 31. Thus, the frame bodies 13 of the stacked sheet materials 11P, 11N are brought into close contact with desired contact pressure. Then, the outer regions 55 of the heaters 51, 53 are energized to thermally weld and permanently join the sheet materials 11P, 11N to airtightly seal the housing space 104S.

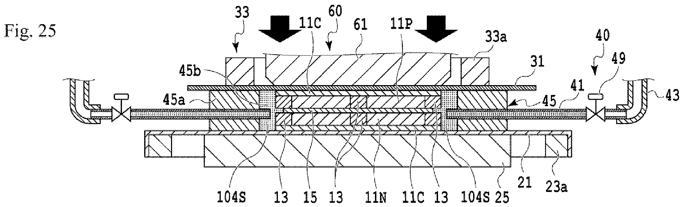

Here, similar to the temporary joining process, in the permanent joining process, as shown in Fig. 25, the frame bodies 13 of the stacked sheet materials 11P, 11N are forcibly cooled by separating and retracting the heaters 51, 53 that performed full circumference heating fusion from above the large sheet 31, replacing the heaters 51, 53 with the cooling plate 61, sandwiching the sheet materials 11P, 11N between the cooling plate 61 and the support plate 25 via the support sheet 21 and large sheet 31, and flowing cooling water. Thus, early start of the next process is enabled while maintaining the device at a constant temperature.

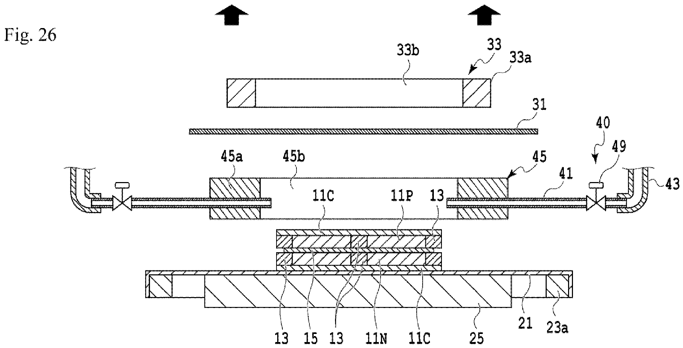

Then, as the completion transport process, as shown in Fig. 26, after sequentially separating the large sheet 31 and the suction frame member 45 from the transport jigs 20 together with the heaters 51, 53 of the heating device 50, the transport jigs 20 supporting the semi-finished products 11 of the positive electrode sheet material 11P and the negative electrode sheet material 11N that are closely stacked in an airtight state are directly slid from the two decompressing/joining processing positions of the work location 104BS and sequentially transferred to the work location 105 where the semi-finished products 11 are collected by suction transport to the transfer device 117. In addition, the transport jig 20 from which the semi-finished product 11 collected at the work location 105 is removed is carried out from the carry-out position 105p of the work location 105 and automatically transferred to the upstream manufacturing device that executes the electrode formation process for forming the negative electrode sheet material 11N on the surface of the support sheet 21 so that the transport jig 20 is repeatedly used.

Returning to Figs. 13 and 15, in the manufacturing device 100, IDs (identification information) 20n, 11n are attached to the surfaces of the positive electrode sheet material 11P and the negative electrode sheet material 11N supported on the support sheet 21 together with the transport jigs (peripheral members) 20 so that the IDs 20n, 11n can be read (acquired) at the work locations 101, 102. Thus, the work accuracy and quality of the transport jigs 20 and sheet materials 11P, 11N in each process can be managed in correspondence. Here, the IDs 20n, 11n can be formed on the sheet materials 11P, 11N by printing, engraving, burning in combinations of characters, numbers and symbols (display information) so that they can be specifically identified and can be acquired by cameras (not illustrated) for processing by the CPU 71 of the control circuit 70 described later. Namely, the CPU 71 constitutes an identification information acquisition device unit. When adopting fixed IDs 20n like the transport jigs 20, for example, IC tags may be installed that hold memory information (not illustrated) that can be read and written contactlessly by RFID (radio frequency identifier) methods.

As shown in Fig. 29, the control circuit (control device unit) 70 has a CPU 71 that adjusts the driving of various connected devices based on acquired information such as video information from cameras 111, 113 and detection information from sensors (not illustrated) according to various programs stored in memory 73. For example, the CPU 71 provides overall control of the transport operation of the motor 100M of the transport device and the motor 100T of the inversion device of the transport jig 20 that functions as a transport device unit, the unwinding operation of the separator roll 15R, the cutting operation of the cutter 115, the suction operation of the suction pump 47 of the suction device 40 and the heating operation of the heaters 51, 53 of the heating device 50.

Specifically, the CPU 71 performs the inspection process that extracts and determines the state of the bonding position by image processing of photographed images from the camera 111 immediately before bonding the positive electrode sheet material 11P and the separator sheet 15 at the work location 101, and adjusts the respective transport amounts to bond the positive electrode sheet material 11P and the separator sheet 15 with high precision.

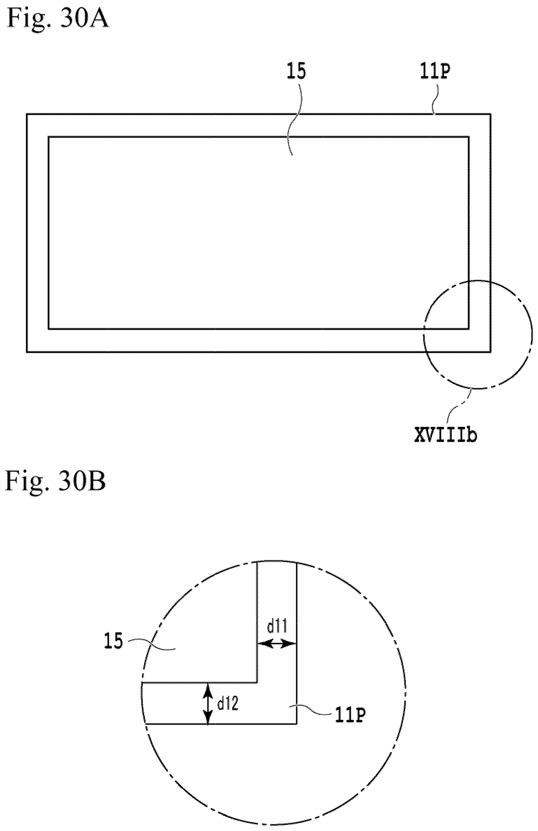

In the inspection process, as shown in Fig. 30A, the CPU 71 acquires an overall photographed image of the positive electrode sheet material 11P and the separator sheet 15 by the camera 111 to inspect bonding accuracy (quality). As illustrated, the separator sheet 15 is formed to be smaller than the positive electrode sheet material 11P. Thus, as shown in Fig. 30B, intervals d11 and d12 in two directions at least at diagonal corners among the four corners are calculated from the photographed image. Then, it is determined whether the intervals d11 and d12 are within a range smaller than threshold values (intervals) t11 and t12 preset in the memory 73. The adjustment process is performed according to the determination result. Namely, the CPU 71 constitutes the position information acquisition device unit and the video processing device unit. In the inspection process at the work location 101 (positive electrode/separator bonding step), although not illustrated, regarding the transport position of the positive electrode sheet material 11P itself before bonding the separator sheet 15, the intervals (deviations) in two directions at least at diagonal corners among the four corners of the positive electrode sheet material 11P with respect to a preset reference position are also calculated using the photographed image of the entire positive electrode sheet material 11P by the camera 111. Then, it is determined whether the intervals are within a range smaller than threshold values preliminarily set in the memory 73. The adjustment process is performed according to the determination result. In the following explanation regarding the intervals (deviations) of the transport position of the positive electrode sheet material 11P itself acquired at the work location 101, the intervals d11, d12 between the positive electrode sheet material 11P and the separator sheet 15 and the threshold values t11, t12 are commonly used for explanation for convenience. However, it goes without saying that the intervals d11, d12 and the threshold values t11, t12 may be set separately.

In addition, similar to the work location 101, the CPU 71 performs the inspection process to extract and determine the bonding position by image processing the photographed images of a not-illustrated camera in the state immediately before bonding of the positive electrode sheet material 11P and the negative electrode sheet material 11N at the work location 103 and adjusts the respective transport amounts. Thus, the positive electrode sheet material 11P and the negative electrode sheet material 11N are bonded with high precision.

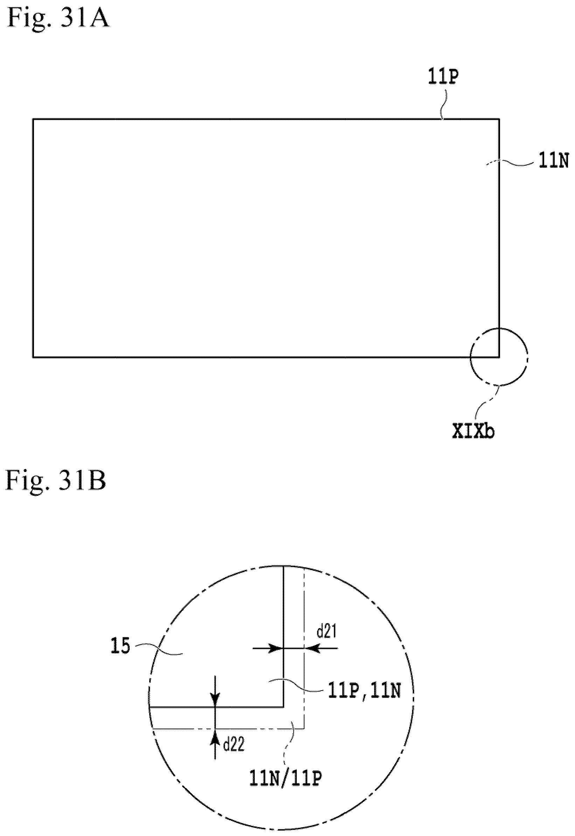

In the inspection process, as shown in Fig. 31A, the CPU 71 acquires an overall photographed image of the positive electrode sheet material 11P and the negative electrode sheet material 11N by the camera to inspect bonding accuracy (quality). As illustrated, the positive electrode sheet material 11P and the negative electrode sheet material 11N are formed in the same shape. Thus, as shown in Fig. 31B, the deviation amounts d21, d22 of the positive electrode sheet material 11P or the negative electrode sheet material 11N shown by two-dot chain lines in the figure from a predetermined position in two directions at least at diagonal corners among the four corners are calculated from the photographed image. Then, it is determined whether the deviation amounts d21, d22 are within a range smaller than threshold values (deviation amounts) t21, t22 preset in the memory 73. The adjustment process is performed according to the determination result.

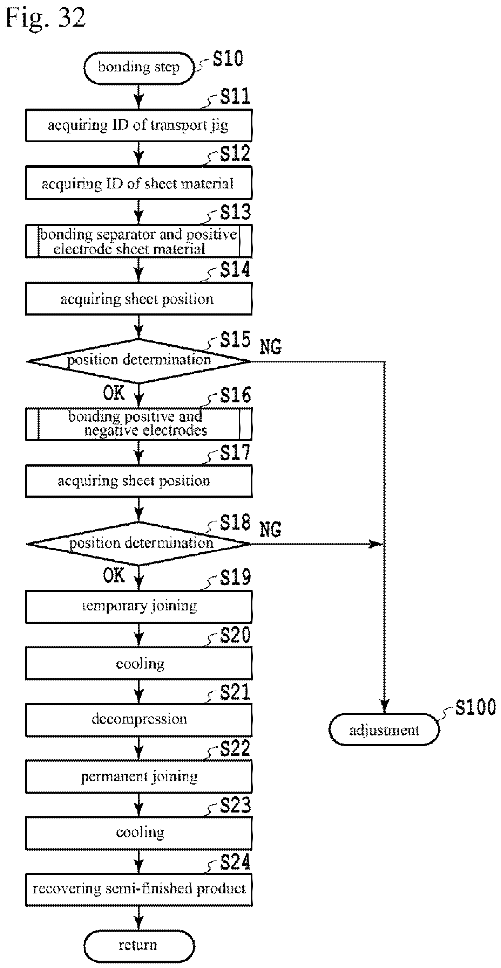

Then, as shown in the flowchart of Fig. 32, the CPU 71 first acquires IDs 20n, 11n of the transport jigs 20 and each of the sheet materials 11P, 11N transported at the work locations 101, 102 and temporarily stores the IDs 20n, 11n in the memory 73 (steps S11, S12). Then, at the work location 101, the separator sheet 15 drawn from the separator roll 15R is cut by the cutter 115 and bonded with high precision to the surface of the positive electrode sheet material 11P supported by the support sheet 21 of the transport jig 20 while performing the inspection process of the transport position of the positive electrode sheet material 11P and the bonding position with the separator sheet 15. Then, the transport jigs 20 are transferred to the next work location 103 (step S13).

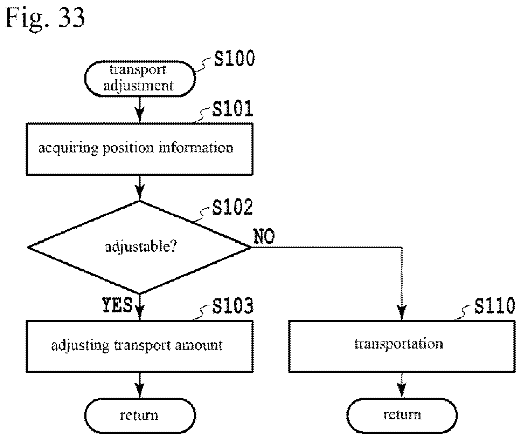

At the work location 101, during the bonding process of the positive electrode sheet material 11P and the separator sheet 15 (step S13), the transport position of only the positive electrode sheet material 11P and the relative position of the positive electrode sheet material 11P and the separator sheet 15 are appropriately acquired (step S14) as the sheet position information, and the position determination is performed by comparing the position with the threshold values in the memory 73 (step S15) to inspect the bonding state immediately before bonding. At this time, as shown in Fig. 30B, the intervals d11, d12 in two directions at corner portions are calculated and acquired as the transport position of only the positive electrode sheet material 11P and the relative position of the positive electrode sheet material 11P and the separator sheet 15, and the position determination is performed by comparing the position with the threshold values t11, t12 in the memory 73. In the position determination of step S15, for example, when the acquired intervals d11, d12 are both smaller than the threshold intervals t11, t12, the determination is OK (allowable position) which means that the operation is performed with a predetermined position accuracy, and the transport jig 20 is transferred to the work location 103 and the step proceeds to the next step S16 after the bonding process of step S13 is completed. On the other hand, when either of the acquired intervals d11, d12 is equal to or greater than the threshold intervals t11, t12, the determination is NG (position defect) which means that the operation is not performed with the predetermined position accuracy, and the processing step S100 of the adjustment operation described later shown in the flowchart of Fig. 33 is performed in parallel.

Then, at the work location 103 where the transport jig 20 of the positive electrode sheet material 11P is transferred from the work location 101 after the OK determination of step S15, the transport jig 20 is inverted up and down, the positive electrode and negative electrode sheet materials 11P, 11N are bonded and stacked by overlapping the negative electrode sheet material 11N transferred from work location 102 with the positive electrode sheet material 11P to sandwich the separator sheet 15, and then transferred to the next work location 104 (step S16). In addition, the transport jig 20 from which the positive electrode sheet material 11P is removed after being inverted is transported from the carry-out position 103p of the work location 103 toward a circulation path returning to the electrode formation step on the upstream side shown by the arrow 105R in the figure.

At the work location 103 as well, similar to work location 101, during the bonding process of the positive electrode sheet material 11P and the negative electrode sheet material 11N (step S16), the deviation amounts d21, d22 in two directions at corner portions shown in Fig. 31B are calculated and acquired as the sheet position information (step S17), and the position determination is performed by comparing the position with the threshold values t21, t22 in the memory 73 (step S18) to inspect the bonding state immediately before bonding. In the step S18, when the acquired deviation amounts d21, d22 are both smaller than the threshold deviation amounts t21, t22, the determination is OK which means that the operation is performed with the predetermined position accuracy, and the transport jig 20 is transferred to the work location 104 and the step proceeds to the next step S19 after performing the bonding process. On the other hand, when either of the acquired deviation amounts d21, d22 is equal to or greater than the threshold deviation amounts t21, t22, the determination is NG which means that the operation is not performed with the predetermined position accuracy, and the processing step S100 of the adjustment operation described later shown in the flowchart of Fig. 33 is processed in parallel.

Here, in the processing step S100 of the transport adjustment shown in the flowchart of Fig. 33 executed after the NG determination in the steps S15, S18, the intervals d11, d12 between the transport position of the positive electrode sheet material 11P and the predetermined position or between the positive electrode sheet material 11P and the separator sheet 15 or the deviation amounts d21, d22 between the positive electrode sheet material 11P and the negative electrode sheet material 11N are read and acquired from the memory 73 for temporarily storage (step S101). Then, the adjustment determination is performed to compare whether the recovery is possible within the threshold values t11, t12, t21, t22 by the adjustment operations of forward rotation drive or reverse rotation drive of the transport jig 20, the separator roll 15R and the like with a predetermined recovery values r11, r12, r21, r22 (step S102).

In the step S102, when the acquired values of the intervals d11, d12 and the deviation amounts d21, d22 in the memory 73 are smaller than the recovery values r11, r12, r21, r22, corresponding adjustment operations of the forward rotation drive or the reverse rotation drive are performed to adjust the transport amount and recover to the predetermined position accuracy. Thus, the adjustment process is performed to update drive conditions (transport amount of transport jig 20 and rotation transport amount of separator roll 15R) stored in the memory 73 based on the acquired values d11, d12, d21, d22 (step S103) and then returns to the interrupted processing step S10.

In addition, in step S102, when the acquired values of the intervals d11, d12 and the deviation amounts d21, d22 in the memory 73 are equal to or greater than the recovery values r11, r12, r21, r22 and the recovery adjustment is impossible, the corresponding transport jig 20 is transported as is from the work location 103 to outside the manufacturing line route shown by arrows 103D, 105D in Fig. 13. Thus, the adjustment process is performed to update the drive conditions (transport amount of transport jig 20 and rotation transport amount of separator roll 15R) stored in the memory 73 based on the acquired values d11, d12, d21, d22 (step S110) and then the interrupted processing step S10 is resumed.

At this time, in steps S14, S17, when the intervals d11, d12 between the positive electrode sheet material 11P and the separator sheet 15, and the deviation amounts d21, d22 between the positive electrode sheet material 11P and the negative electrode sheet material 11N cannot be acquired before bonding and are acquired after bonding, the adjustment process is similarly performed to update the drive conditions (transport amount of transport jig 20 and rotation transport amount of separator roll 15R) stored in the memory 73 based on the acquired values d11, d12, d21, d22 read from the memory 73, and then the corresponding transport jig 20 may be transported from the work location 103 outside the manufacturing line route shown by arrows 103D, 105D in Fig. 13, and then the interrupted processing step S10 may be resumed although illustration is omitted.

Because of this, the manufacturing operation of the manufacturing device 100 can be continued while maintaining the bonding accuracy with high precision without stopping and interrupting the manufacturing operation of the manufacturing device 100 and forcing the adjustment work by workers every time the NG determination is made in the bonding inspection without reducing the manufacturing efficiency.

After this, to explain briefly, at the work location 104BS after the OK determination in step S18, a part of the frame body 13 of the stacked sheet materials 11P, 11N housed in the housing space 104S in the transport jigs 20 positioned at two locations are intermittently heat-fused by energizing individual locations 57a to 57c in the inner region 57 of the heaters 51, 53 of the heating device 50 to fix the relative positions for temporary joining (step S19), and then forcibly cooled to reduce work temperature and suppress occurrence of deformation due to suction force (step S20) as described above.

Then, the pressure is reduced by sucking air from the housing space 104S, the space between the stacked sheet materials 11P, 11N is sucked from non-joined locations of the frame body 13 by individual locations 57d that are de-energized in the inner region 57 of the heaters 51, 53 to make the sheet materials 11P, 11N adhere closely to both surfaces of the separator sheet 15 (step S21), and then both outer regions 55 of the heaters 51, 53 are energized to heat-fuse and fix the entire circumference of the frame bodies 13 (13a, 13b) of the stacked sheet materials 11P, 11N for the permanent joining (step S22). After this, the transport jig 20 is transferred to the next work location 105 (step S23) in a state where work temperature is reduced by forced cooling and deformation occurrence is suppressed. Thus, the semi-finished product 11 with the permanent joining between the frame bodies 13 of the stacked sheet materials 11P, 11N is sucked and held by the transfer device 117 to transport and recover the stacked sheet materials 11P, 11N at the work location 105 (step S24).

As described above, in the manufacturing device 100 of the present embodiment, along with the IDs of the positive electrode sheet material 11P and the negative electrode sheet material 11N transported to the work location 104BS, stacked and joined, the deviation amounts d21, d22 and the intervals d11, d12 with the separator sheet 15 are acquired and the transport amounts can be adjusted to stack at appropriate positions based on the acquired information. Thus, the position accuracy of the positive electrode sheet material and the negative electrode sheet material facing each other with the separator sheet sandwiched therebetween can be ensured (maintained).

Accordingly, high-quality transporting/joining process of the positive electrode sheet material 11P and the negative electrode sheet material 11N can be executed. In addition, the stopping of the manufacturing device 100 and the forcing of the monitoring work can be reduced. Thus, work efficiency and work environment can be improved.

### <Summary of embodiments>

Then, the invention-specifying matters constituting the present invention described in the above embodiment are listed in succession. It goes without saying that the following merely explains the constituent elements in the claims and does not limit the constituent elements to specific members and the like.
[1] A manufacturing device of a lithium-ion battery in which a positive electrode sheet material and a negative electrode sheet material are joined in a state of being stacked facing each other while interposing a separator sheet, the manufacturing device including:
   an identification information acquisition device unit configured to acquire an identification information of each of the positive electrode sheet material and the negative electrode sheet material;
   a position information acquisition device unit configured to acquire a position information of each of the positive electrode sheet material and the negative electrode sheet material;
   a transport device unit configured to transport each of the positive electrode sheet material, the negative electrode sheet material and the separator sheet to a stacking position;
   a joining device unit configured to join the positive electrode sheet material and the negative electrode sheet material that are transported to the stacking position and stacked while sandwiching the separator sheet; and
   a control device unit configured to control various device units so as to coordinate the entire manufacturing device, wherein
   the control device unit is configured to receive various information from the identification information acquisition device unit and the position information acquisition device unit, adjust a transport amount of each of the positive electrode sheet material and the negative electrode sheet material and perform a joining process by the joining device unit at an appropriate stacking position, and
   the control device unit is configured to update and adjust the transport amount set to each of the positive electrode sheet material and the negative electrode sheet material to be transported by the transport device unit to a value necessary for transporting each of the positive electrode sheet material and the negative electrode sheet material to the appropriate stacking position.
[2] The manufacturing device of the lithium-ion battery according to [1], wherein the control device unit is configured to drive the transport device unit again to adjust the transport amount appropriately and position the positive electrode sheet material and the negative electrode sheet material transported by the transport device unit according to the set transport amount at an optimal stacking position and then join the positive electrode sheet material and the negative electrode sheet material by the joining device unit.
[3] The manufacturing device of the lithium-ion battery according to [1] or [2], wherein the identification information acquisition device unit is configured to acquire the identification information by reading a display information or a memory information attached to a surface or a peripheral member of each of the positive electrode sheet material and the negative electrode sheet material.
[4] The manufacturing device of the lithium-ion battery according to any one of [1] to [3], wherein the position information acquisition device unit includes: a photographing device unit configured to photograph each of the positive electrode sheet material and the negative electrode sheet material transported by the transport device unit; and a video processing device unit configured to acquire a position information of each of the positive electrode sheet material and the negative electrode sheet material in a transport path based on a video information photographed by the photographing device unit.
[5] The manufacturing device of the lithium-ion battery according to any one of [1] to [4], wherein the transport device unit includes: a pair of electrode support members configured to support each of the positive electrode sheet material and the negative electrode sheet material by face-to-face contact with one surface side of the positive electrode sheet material and the negative electrode sheet material; a sheet support member configured to support the separator sheet in a state of being drawn out to a position facing one surface side of either the positive electrode sheet material or the negative electrode sheet material from a rolled state; and a movement device unit configured to move each of the pair of electrode support members and the sheet support member so that the positive electrode sheet material and the negative electrode sheet material are stacked while interposing the separator sheet to form a face-to-face stacked state.
[6] The manufacturing device of the lithium-ion battery according to any one of [1] to [5], wherein each of the positive electrode sheet material and the negative electrode sheet material is surrounded by a frame-shaped sealing material, the joining device unit includes a decompression device unit configured to suction and depressurize a space around the positive electrode sheet material and the negative electrode sheet material, and the frame-shaped sealing material of the positive electrode sheet material and the frame-shaped sealing material of the negative electrode sheet material are joined after the decompression device unit suctions and depressurizes between the positive electrode sheet material and the negative electrode sheet material that are transported to the stacking position by the transport device unit and positioned together with the separator sheet.
[7] The manufacturing device of the lithium-ion battery according to any one of [1] to [6], wherein the control device unit is configured to receive various information from the identification information acquisition device unit and the position information acquisition device unit, the process of adjusting the transport amount adjusted by the transport device unit is continued when a position information of each of the positive electrode sheet material and the negative electrode sheet material at the stacking position is within a predetermined allowable position, and an entire or at least at a part of the positive electrode sheet material, the negative electrode sheet material and the separator sheet located at a defective position is transferred to an outside of a manufacturing line route when the position information is a position defect where the position information is not within the predetermined allowable position.
[8] The manufacturing device of the lithium-ion battery according to [7], wherein the control device unit is configured to determine to be within the allowable position when the position information is within the predetermined allowable position and determine to be the position defect when the position information is not within the predetermined allowable position based on the positive electrode sheet material received from the position information acquisition device unit and the position information of each of the negative electrode sheet material and the stacking position.
[9] The manufacturing device of the lithium-ion battery according to [7] or [8], wherein the transport device unit is configured to transport and stack the positive electrode sheet material and the other surface of the negative electrode sheet material after the separator sheet transported to face the positive electrode sheet material transported to the stacking position and one surface of the negative electrode sheet material is stacked,
   the position information acquisition device unit is configured to obtain one position information of the positive electrode sheet material and the negative electrode sheet material stacked to face the separator sheet and the other position information of the positive electrode sheet material and the negative electrode sheet material not stacked to face the separator sheet, and
   the control device unit is configured to perform a determination process of the allowable position or the position defect based on the position information of each of the positive electrode sheet material and the negative electrode sheet material obtained by the position information acquisition device unit.

The scope of the present invention is not limited to the illustrated and described exemplary embodiments. The present invention also includes all embodiments having the effects equivalent to those intended by the present invention. Furthermore, the scope of the present invention is not limited to combinations of features of the invention defined by each claim. The present invention can be defined by any desired combination of specific features among all disclosed respective features.

### Industrial applicability

The present invention can be applied to lithium ion batteries.

### Explanation of reference numerals

11: semi-finished product; 11C: resin current collector; 11N: negative electrode sheet material; 11P: positive electrode sheet material; 13: frame body; 15: separator sheet; 15R: separator roll; 20: transport jig; 21: support sheet; 23: transport frame member; 25: support plate; 31: large sheet; 33: pressing frame member; 40: suction device; 41: suction pipe; 41a: tip portion (suction port); 45: suction frame member; 50: heating device; 51: outer circumference heater; 53: transverse heater; 55: outer region; 57: inner region; 57a to 57d: individual location (partial range); 60: cooling device; 61: cooling plate; 70: control circuit; 71: CPU; 73: memory; 100: manufacturing device; 100M: transport motor; 100T: inversion motor; 101 to 105: work location; 111: camera; 117: transfer device; d11, d12: interval; d21, d22: deviation amount; 1010: substrate; 1011: substrate; 1020: electrode body; 1021: electrode body; 1025: electrolyte solution; 1030: separator; 1100: transport jig; 1110: transport jig; 1150: roller; 1200: electrode supply unit; 1300: application unit; 1310: nozzle; 1400: bonding unit; 1410: support body; 1500: sealing unit; 1600: separator cutting unit; 1610: second support body; 1620: guide roller; 1630: cutter; 2010: separator roll; 2015: belt-shaped separator; 2015' : cut separator; 2021: transport roller; 2022: transport roller; 2023: transport roller; 2024: transport roller; 2025: transport roller; 2030: guide roller; 2040: cutter; 2050: first support body; 2055: first transport path; 2060: second support body; 2065: second transport path; 2070: transport jig; 2080: electrode; 2081: substrate; 2100: battery manufacturing device; 3100: battery manufacturing system; 3010: transport jig; 3010A: first transport jig (one transport jig); 3010B: second transport jig (other transport jig); 3011: jig frame portion; 3012: short side portion; 3013: long side portion; 3014: transport film; 3015: adhesive layer; 3020A, 20B: electrode arrangement unit (electrode arrangement means); 3030: separator bonding unit (separator bonding means); 3040: inversion unit (inversion means); 3050: bonding unit (bonding means); 3051: alignment stage; 3052: first heating unit; 3060: first recovery unit (first recovery means); 3070: vacuum seal unit (vacuum seal means); 3071: vacuum stage; 3072: cover film; 3073: second heating unit; 3080: second recovery unit (second recovery means); 3081: suction fixing surface plate; S: separator; W: workpieces (battery electrode); WA: positive electrode; WB: negative electrode

## Claims

1. A battery manufacturing device comprising:
an application unit configured to apply an electrolyte solution to an electrode body formed by supplying an electrode composition containing an electrode active material to a substrate; and
a bonding unit configured to bond a separator with the electrode body to which the electrolyte solution is applied, wherein
the bonding unit has a positioning function achieved by an image processing.

2. The battery manufacturing device according to claim 1, wherein
the application unit includes a temperature adjustment unit configured to adjust a temperature of the electrolyte solution and a nozzle configured to apply the electrolyte solution, and
the battery manufacturing device further comprises a system unit configured to calculate an amount of the electrolyte solution to be applied based on a weight of the electrode body before applying the electrolyte solution and cause the nozzle to apply the calculated amount of the electrolyte solution.

3. The battery manufacturing device according to claim 1, wherein
the bonding unit includes a support body configured to hold the separator and bond the separator with the electrode body to which the electrolyte solution is applied,
a surface of the support body is formed of a porous body having a hole in fluid communication with a gas piping,
a negative pressure is configured to be applied to the gas piping when the support body holds the separator,
the surface of the support body, which is configured to be in contact with the separator, includes a buffer layer, and
the buffer layer prevents the electrolyte solution from entering the gas piping from the electrode body to which the electrolyte solution is applied when the separator is contacted and bonded with the electrode body to which the electrolyte solution is applied.

4. The battery manufacturing device according to claim 1, wherein
the bonding unit includes a support body configured to hold the separator and bond the separator with the electrode body to which the electrolyte solution is applied,
a surface of the support body is formed of a porous body having a hole in fluid communication with a gas piping,
a negative pressure is configured to be applied to the gas piping when the support body holds the separator, and
gas is configured to be released from the gas piping through the hole when the separator comes into non-contact bonding with the electrode body to which the electrolyte solution is applied.

5. The battery manufacturing device according to claim 1, wherein
the bonding unit further includes a static electricity removal unit.

6. A battery manufacturing system including the battery manufacturing device according to claim 1, the battery manufacturing system comprising:
an electrode arrangement unit configured to arrange battery electrodes containing an electrolyte solution on two transport jigs respectively;
a separator bonding unit configured to bond a separator with one of the battery electrodes held on one of the transport jigs by the bonding unit;
an inversion unit configured to invert one of the transport jigs;
a bonding unit configured to bond one of the battery electrodes held on one of the transport jigs with the other of the battery electrodes held on the other of the transport jigs; and
a first recovery unit configured to separate one of the transport jigs from the bonded battery electrodes on the other of the transport jigs and transport one of the transport jigs to the electrode arrangement unit, wherein
the first recovery unit includes a transport line connected to the electrode arrangement unit or an automatic transport unit for transporting one of the transport jigs to the electrode arrangement unit.

7. The battery manufacturing system according to claim 6, wherein
the transport jigs include a jig frame portion and a transport film erected on the jig frame portion, the transport film having flexibility, and
the transport film includes an adhesive layer for adhesive fixing or an insulator for electrostatic fixing in a region where the battery electrodes are placed.

8. The battery manufacturing system according to claim 7, wherein
the adhesive layer of the transport film has thermosensitivity.

9. The battery manufacturing system according to claim 7, wherein
the bonding unit is configured to perform a heat sealing at intervals along a pair of edge portions extending in a direction in which the transport film is erected in the bonded battery electrodes on the other of the transport jigs.

10. A manufacturing device of a lithium-ion battery in which a positive electrode sheet material and a negative electrode sheet material are joined in a state of being stacked facing each other while interposing a separator sheet, the manufacturing device comprising:
the battery manufacturing device according to claim 1;
an identification information acquisition device unit configured to acquire an identification information of each of the positive electrode sheet material and the negative electrode sheet material;
a position information acquisition device unit configured to acquire a position information of each of the positive electrode sheet material and the negative electrode sheet material;
a transport device unit configured to transport each of the positive electrode sheet material, the negative electrode sheet material and the separator sheet to a stacking position;
a joining device unit configured to join the positive electrode sheet material and the negative electrode sheet material that are transported to the stacking position and stacked while interposing the separator sheet; and
a control device unit configured to control various device units so as to coordinate the entire manufacturing device, wherein
the control device unit is configured to receive various information from the identification information acquisition device unit and the position information acquisition device unit, adjust a transport amount of each of the positive electrode sheet material and the negative electrode sheet material and perform a joining process by the joining device unit at an appropriate stacking position, and
the control device unit is configured to update and adjust the transport amount set to each of the positive electrode sheet material and the negative electrode sheet material to be transported by the transport device unit to a value necessary for transporting each of the positive electrode sheet material and the negative electrode sheet material to the appropriate stacking position.

11. The manufacturing device of the lithium-ion battery according to claim 10, wherein
the control device unit is configured to drive the transport device unit again to adjust the transport amount appropriately and position the positive electrode sheet material and the negative electrode sheet material transported by the transport device unit according to the set transport amount at an optimal stacking position and then join the positive electrode sheet material and the negative electrode sheet material by the joining device unit.

12. The manufacturing device of the lithium-ion battery according to claim 10, wherein
the identification information acquisition device unit is configured to acquire the identification information by reading a display information or a memory information attached to a surface or a peripheral member of each of the positive electrode sheet material and the negative electrode sheet material.

13. The manufacturing device of the lithium-ion battery according to claim 10, wherein
the position information acquisition device unit includes:
a photographing device unit configured to photograph each of the positive electrode sheet material and the negative electrode sheet material transported by the transport device unit; and
a video processing device unit configured to acquire a position information of each of the positive electrode sheet material and the negative electrode sheet material in a transport path based on a video information photographed by the photographing device unit.

14. The manufacturing device of the lithium-ion battery according to claim 10, wherein the transport device unit includes:
a pair of electrode support members configured to support each of the positive electrode sheet material and the negative electrode sheet material by face-to-face contact with one surface side of the positive electrode sheet material and one surface side of the negative electrode sheet material;
a sheet support member configured to support the separator sheet in a state of being drawn out to a position facing one surface side of either the positive electrode sheet material or the negative electrode sheet material from a rolled state; and
a movement device unit configured to move each of the pair of electrode support members and the sheet support member so that the positive electrode sheet material and the negative electrode sheet material are stacked while interposing the separator sheet to form a face-to-face stacked state.

15. The manufacturing device of the lithium-ion battery according to claim 10, wherein
each of the positive electrode sheet material and the negative electrode sheet material is surrounded by a frame-shaped sealing material,
the joining device unit includes a decompression device unit configured to suction and depressurize a space around the positive electrode sheet material and the negative electrode sheet material, and
the frame-shaped sealing material of the positive electrode sheet material and the frame-shaped sealing material of the negative electrode sheet material are joined after the decompression device unit suctions and depressurizes between the positive electrode sheet material and the negative electrode sheet material that are transported to the stacking position by the transport device unit and positioned together with the separator sheet.

16. A manufacturing method of a battery, the manufacturing method comprising:
a step of supplying an electrode composition containing an electrode active material to a substrate to form an electrode body;
a step of applying an electrolyte solution to the electrode body;
a step of cutting a separator to a size that covers the electrode body; and
a step of transporting the cut separator onto the electrode body to which the electrolyte solution is applied, positioning the separator and the electrode body by image processing and bonding the separator with a surface of the electrode body to which the electrolyte solution is applied.

17. The manufacturing method of the battery according to claim 16, further comprising:
a step of transporting the separator having a belt-shape from a separator roll and placing the separator on a first support body, wherein the separator having the belt-shape is cut to a size that covers the electrode body on the first support body.

18. The manufacturing method of the battery according to claim 17, wherein
a thickness of the separator is 20 µm or less.

19. The manufacturing method of the battery according to claim 17, wherein
the separator having the belt-shape is transported by a helical roller, and
a cut surface of the separator having the belt-shape is perpendicular to a traveling direction of the separator having the belt-shape.

20. The manufacturing method of the battery according to claim 17, wherein
the first support body has a function of holding the separator.
